# EUROPEAN PATENT APPLICATION

(11) **EP 1 619 524 A1**
(43) Date of publication of application: **25.01.2006**
(21) Application number: 04730084.3
(22) Date of filing: 28.04.2004
(51) Int. Cl.: G02B 5/02, B32B 7/02

(54) **ELECTROMAGNETIC-SHIELDING LIGHT DIFFUSION SHEET**

(30) Priority: 28.04.2003 JP 2003123736
(71) Applicant: TAKIRON CO., LTD., Osaka-shi, Osaka 541-0052 (JP)
(72) Inventor: Ito, Hidemi, Osaka-shi, Osaka 5410052 (JP); Sakai, Masato, Osaka-shi, Osaka 5410052 (JP); Se, Koichi, Osaka-shi, Osaka 5410052 (JP)
(74) Representative: HOFFMANN EITLE
(86) International application number: PCT/JP2004/006225
(87) International publication number: WO 2004/097466

(57) **Abstract**

A subject for the invention is to provide an electromagnetic-shielding light-diffusing sheet which has satisfactory electromagnetic shielding performance, attains a large transmitted-light amount, and can emit even diffused light having reduced unevenness of luminance.

The invention relates to an electromagnetic-shielding light-diffusing sheet comprising a light-diffusing sheet main body and, laminated on at least one side thereof, a light-transmitting electroconductive layer having a surface resistivity of 10⁵ Ω/□ or lower.

## Description

### FIELD OF THE INVENTION

The present invention relates to a light-diffusing sheet having an electromagnetic-shielding function.

### BACKGROUND ART

Light-diffusing sheets are used in the backlight units of liquid-crystal displays or the like and in illuminated signboards, illuminator covers or the like, and the like in order to diffuse the light emitted by a point light source or linear light source and thereby obtain uniform even high-luminance illumination. General ones of such light-diffusing sheets are light-transmitting synthetic resin sheets having fine recesses and protrusions formed on one or each side thereof, or synthetic resin sheets containing a light-diffusing agent. However, these sheets have had problems that they are apt to be electrostatically charged to suffer dust particle adhesion thereto and that they cannot shield from electromagnetic waves.

In order to cope with the problem concerning dust particle adhesion, a light-diffusing sheet has been proposed that comprised a transparent resin sheet having many fine recesses and protrusions formed on one side thereof and an antistatic layer which comprises 100 parts by weight of a transparent resin binder and 0.2-50 parts by weight of an electrolyte and has been formed along the recesses and protrusions (see JP-A-7-181307).

On the other hand, in order to cope with the problem that shielding from electromagnetic waves is impossible, it has been proposed to dispose an electromagnetic-shielding sheet besides a light-diffusing sheet (see JP-A-2004-38042).

However, light-diffusing sheets having an antistatic layer comprising a transparent resin binder and an electrolyte, like the light-diffusing sheet described in the patent document 1, have been incapable of exhibiting electromagnetic shielding performance even though they can exhibit an antistatic function to prevent dust particle adhesion, because the surface resistivity of the antistatic layer is 10⁸ Ω/□ or higher.

Furthermore, the technique of using both of a light-diffusing sheet and an electromagnetic-shielding sheet as described in the patent document 2, is disadvantageous because not only the superposition of the two sheets results in a decrease in total light transmittance and arouse, e.g., a trouble that the liquid-crystal display becomes dark, but also the incorporation of these sheets is cumbersome.

### DISCLOSURE OF THE INVENTION

The invention has been achieved in order to cope with those circumstances. An object of the invention is to provide an electromagnetic-shielding light-diffusing sheet which has satisfactory electromagnetic shielding performance and has a high total light transmittance and can emit even diffused light.

In order to accomplish the object, the electromagnetic-shielding light-diffusing sheet of the invention is characterized by comprising a light-diffusing sheet main body and, laminated on at least one side thereof, a light-transmitting electroconductive layer having a surface resistivity of 10⁵ Ω/□ or lower. The term "sheet" herein is a term for a wide conception which includes from films having a thickness of about 30 µm to plates having a thickness of about 10 mm.

In the electromagnetic-shielding light-diffusing sheet of the invention, it is desirable that: the light-diffusing sheet main body should contain a light-diffusing agent; the light-diffusing agent should be contained in an amount of 0.1-35% by mass; and the light-diffusing sheet should have fine recesses and protrusions formed on at least one side thereof. It is further desirable that: the light-diffusing sheet main body should be a multilayered sheet comprising at least a core layer and a surface layer, and the core layer should contain a light-diffusing agent and the surface layer should contain no light-diffusing agent; the core layer should contain no light-diffusing agent and the surface layer should contain a light-diffusing agent; the core layer and the surface layer should contain a light-diffusing agent; the light-transmitting resin used for the surface layer should be a resin having a lower refractive index than the light-transmitting resin used for the core layer; and at least the surface layer should contain an ultraviolet absorber.

Furthermore, it is desirable that: the light-diffusing sheet main body should be made of a light-transmitting polypropylene resin containing a talc light-diffusing agent in an amount of 15-35% by mass and the light-diffusing sheet should have fine recesses and protrusions formed on each side thereof; the light-diffusing sheet main body should be a multilayered sheet comprising a core layer made of a light-transmitting polypropylene resin containing a talc light-diffusing agent in an amount of 15-35% by mass and, laminated on at least one side of the core layer, a surface layer made of a light-transmitting resin, and the light-diffusing sheet should have fine recesses and protrusions formed on each side thereof; and the light-diffusing sheet main body should be a multilayered sheet comprising a core layer made of a light-transmitting polycarbonate resin containing an acrylic light-diffusing agent in an amount of 0.1-20% by mass and, laminated on at least one side of the core layer, a surface layer made of a light-transmitting resin.

In the electromagnetic-shielding light-diffusing sheet of the invention, the light-transmitting electroconductive layer desirably is a metal oxide layer or a layer containing ultrafine electroconductive fibers.

. It is also desirable that: the ultrafine electroconductive fibers contained in the light-transmitting electroconductive layer should be in a dispersed state without aggregating and be in contact with one another; or the ultrafine electroconductive fibers should be in contact with one another in such a state that the individual fibers have been dispersed separately from one another or that bundles each composed of plural_ultrafine electroconductive fibers have been dispersed separately from one another. The ultrafine electroconductive fibers desirably are carbon nanotubes.

Furthermore, it is desirable that the amount of the carbon nanotubes contained in the light-transmitting electroconductive layer should be 20-450 mg/m² and the light-transmitting electroconductive layer should have a thickness of 10-400 nm.

Moreover, it is desirable that the electromagnetic-shielding light-diffusing sheet should have a total light transmittance of 50-95% and a haze of 30-95%. It is furthermore desirable that the electromagnetic-shielding light-diffusing sheet should have a light-transmitting resin layer covered on the light-transmitting electroconductive layer.

In the electromagnetic-shielding light-diffusing sheet of the invention, the light-transmitting electroconductive layer laminated on one side has a surface resistivity of 10⁵ Ω/□ or lower. Because of this, satisfactory electromagnetic shielding performance is exhibited by the light-transmitting electroconductive layer. The light being transmitted is diffused by the light-diffusing sheet main body. Thus, light-diffusing performance is simultaneously exhibited.

In the electromagnetic-shielding light-diffusing sheet of the invention, when the light-diffusing sheet main body contains a light-diffusing agent or has fine recesses and protrusions formed on a surface thereof, light is diffused by the light-diffusing agent or the fine recesses and protrusions. As a result, not only diffused light which has been evenly diffused is emitted by the light-diffusing sheet but also opacifying properties are improved. Even when the light-diffusing sheet is thin, the light-diffusing sheet main body has a reduced coefficient of linear expansion and an increased modulus of elasticity due to the light-diffusing agent contained in an amount of 0.1-35% by mass. Because of this, an electromagnetic-shielding light-diffusing sheet can be obtained which is inhibited from thermally expanding or contracting and less apt to rumple even when the light-diffusing sheet is heated by the heat radiated from the light source.

In the electromagnetic-shielding light-diffusing sheet of the invention, when the light-diffusing sheet main body is a multilayered sheet comprising a core layer containing a light-diffusing agent and a surface layer containing no light-diffusing agent, this sheet has the effect of preventing the light-diffusing agent from falling off by the surface layer, besides the same effect as described above.

When the light-diffusing sheet main body is a multilayered sheet comprising a core layer containing no light-diffusing agent and a surface layer containing a light-diffusing agent, the amount of the light-diffusing agent contained is smaller and the amount of transmitted light can be increased accordingly. Furthermore, when the light-diffusing sheet is a multilayered sheet comprising a core layer and a surface layer which each contain a light-diffusing agent, the amount of transmitted light, luminance, and other properties can be modified, by changing the contents and kinds of the light-diffusing agents, so as to be suitable for the desired quality.

When the light-transmitting resin constituting the surface layer has a lower refractive index than the light-transmitting resin constituting the core layer and this surface layer is used on the light entrance side, then the amount of the light incident on the surface layer from air is increased and the amount of transmitted light is increased. An improvement in luminance can hence be attained.

Furthermore, when the surface layer contains an ultraviolet absorber and the light-diffusing sheet is disposed in, e.g., a backlight unit so that this surface layer is located on the light source side, then the surface layer and the core layer are inhibited from suffering light deterioration. As a result, the light-diffusing sheet is less apt to yellow and can retain a large transmitted-light amount over long.

In the electromagnetic-shielding light-diffusing sheet of the invention, when the light-transmitting electroconductive layer is a metal oxide layer, this electroconductive layer has a surface resistivity of about 10⁰-10³ Ω/□ even when the layer thickness is reduced to about 30-100 nm so as to enhance light-transmitting properties. Consequently, satisfactory electromagnetic shielding performance is exhibited. Furthermore, when the light-transmitting electroconductive layer is a layer containing ultrafine electroconductive fibers, sufficient electrical conduction among the ultrafine electroconductive fibers is secured and the layer has a surface resistivity of 10⁰-10⁵ Ω/□, even when the thickness of the layer is considerably reduced so as to impart satisfactory light-transmitting properties. Consequently, sufficient electromagnetic shielding performance is exhibited.

When the ultrafine electroconductive fibers contained in the light-transmitting electroconductive layer are in a dispersed state without aggregating and are in contact with one another, or are in contact with one another in such a state that the individual fibers have been dispersed separately from one another or that bundles each composed of plural ultrafine electroconductive fibers have been dispersed separately from one another, then the ultrafine electroconductive fibers get loose because of the non-aggregated state of the fibers and sufficient electrical conduction among the fibers can be secured. As a result, satisfactory electrical conductivity can hence be obtained. Because of this, even when the amount of the ultrafine electroconductive fibers is reduced or the thickness of the electroconductive layer is reduced, an electrical conductivity of 10⁵ Ω/□ or lower can be secured and transparency can be improved by a degree corresponding to the reduction in the amount of the ultrafine electroconductive fibers or in thickness.

When the ultrafine electroconductive fibers are carbon nanotubes, contact among the carbon nanotubes can be more satisfactorily secured because they are slim and long. As a result, the surface resistivity can be easily controlled so as to be 10⁵ Ω/□ or lower and the light-transmitting electroconductive layer can have high transparency.

Furthermore, in the electromagnetic-shielding light-diffusing sheet of the invention, when a light-transmitting resin covering layer is laminated so as to cover the light-transmitting electroconductive layer therewith, the light-transmitting electroconductive layer can be protected against damage.

### BRIEF DESCRIPTION OF THE DRAWINGS

Fig. 1 is a sectional view of an electromagnetic-shielding light-diffusing sheet according to one embodiment of the invention.
Fig. 2 is a sectional view of an electromagnetic-shielding light-diffusing sheet according to another embodiment of the invention.
Fig. 3 is a sectional view of an electromagnetic-shielding light-diffusing sheet according to still another embodiment of the invention.
Fig. 4 is a sectional view of an electromagnetic-shielding light-diffusing sheet according to a further embodiment of the invention.
Fig. 5 is a sectional view of an electromagnetic-shielding light-diffusing sheet according to still a further embodiment of the invention.
Fig. 6 is a sectional view of an electromagnetic-shielding light-diffusing sheet according to still a further embodiment of the invention.
Fig. 7 (A) and (B) are sectional views illustrating the dispersed state of ultrafine electroconductive fibers in a light-transmitting electroconductive layer.
Fig. 8 is a diagrammatic plane view showing the dispersed state of ultrafine electroconductive fibers in a light-transmitting electroconductive layer.
Fig. 9 is a graph obtained through a measurement of the percentage shielding from electric field with electromagnetic-shielding light-diffusing sheets of the invention.

The reference numerals and signs in the figures have the following denotations: 1 denotes an electromagnetic-shielding light-diffusing sheet; 2, 20, 30, 40, 50, and 60 each denote a light-diffusing sheet main body; 2a, 3a, 4a, and 6a each denote a core layer; 2b, 3b, 4b, and 6b each denote a surface layer; 3 denotes a light-transmitting electroconductive layer; and 3a denotes ultrafine electroconductive fibers.

### BEST MODE FOR CARRYING OUT THE INVENTION

Specific embodiments of the invention will be described below in detail by reference to the drawings, but the invention should not be construed as being limited to these embodiments only.

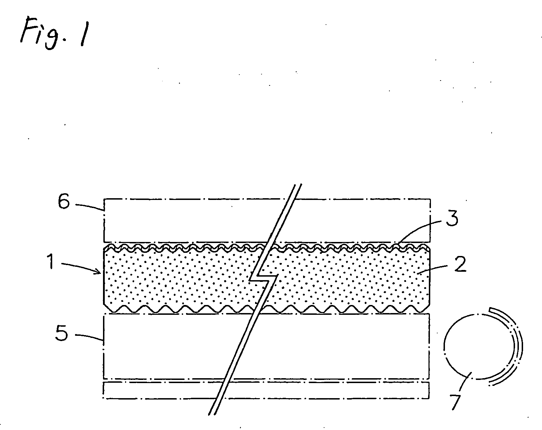

Fig. 1 is a sectional view of an electromagnetic-shielding light-diffusing sheet according to one embodiment of the invention. The imaginary lines indicate a backlight unit of the edge light type.

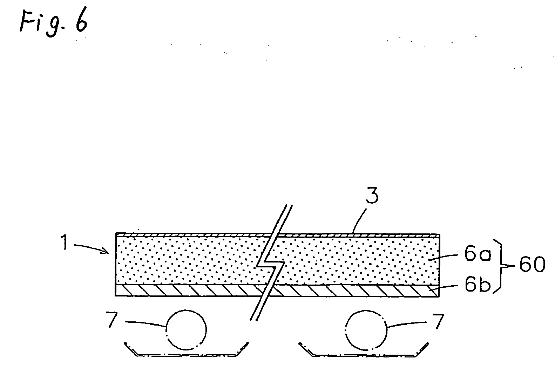

This electromagnetic-shielding light-diffusing sheet 1 (hereinafter often referred to as light-diffusing sheet 1) is one obtained by superposing a light-transmitting electroconductive layer 3 having a surface resistivity of 10⁵ Ω/□ or lower on one side (upper side) of a light-diffusing sheet main body 2 and laminating the layer 3 with the main body 2. This light-diffusing sheet 1 is used after having been incorporated, for example, into an edge light type backlight unit such as, e.g., that shown by the imaginary lines in Fig. 1. It is a matter of course that this light-diffusing sheet can be used after having been incorporated into the direct type backlight unit shown in Fig. 6.

The light-diffusing sheet main body 2 of this light-diffusing sheet 1 is a single-layer sheet of a light-transmitting resin containing a light-diffusing agent in an amount of 0.1-35% by mass. This main body 2 has fine recesses and protrusions formed on each of the upper and lower sides thereof, and the light-transmitting electroconductive layer 3 has been laminated along the recesses and protrusions on the upper side, which serves as a light emission side, so as to have recesses and protrusions. Such recesses and protrusions may be formed by pressing an embossing roll or the like against the surface of a light-diffusing sheet 1 and transferring the recesses and protrusions of the roll. Alternatively, use may be made of a method in which fine recesses and protrusions are formed on a light-diffusing sheet main body 2 with an embossing roll or the like or recesses and protrusions are formed on a light-diffusing sheet main body 2 by regulating the particle diameter, content, etc. of the light-diffusing agent contained, before a light-transmitting electroconductive layer 3 is laminated along these recesses and protrusions.

It is preferred that the recesses and protrusions on each of the upper and lower sides of the light-diffusing sheet main body 2 should have been formed so that the protrusions each have a round top, and that the protrusions of the light-transmitting electroconductive layer 3 laminated so as to have recesses and protrusions each should have a round top. In the case where the protrusions have such roundness, there is no fear that when this light-diffusing sheet 1 is incorporated between the lightguide plate 5 and the lens film 6 of the backlight unit shown by the imaginary lines, the tops of the protrusions may damage the lightguide plate 5 or lens film 6. The fine recesses and protrusions formed on each of the upper and lower sides of the light-diffusing sheet main body 2 are not always necessary, and each of the upper and lower sides may be flat. Alternatively, recesses and protrusions may be formed on one side and the other side may be made flat.

Each of the upper and lower sides of the light-diffusing sheet 1 has been regulated so as to have an arithmetic mean roughness (arithmetic mean roughness Ra determined in accordance with JIS B 0601) in the range of 0.5-10.0 µm, preferably 0.6-8.0 µm, by forming the fine recesses and protrusions. When the arithmetic mean roughness Ra on each side of the light-diffusing sheet 1 is in the range of 0.5-10.0 µm, light supplied through the lightguide plate 5 is apt to evenly enter the sheet 1 and the light being evenly emitted is satisfactorily diffused. Because of this, even diffused light can be emitted with a reduced light loss. The relationship between the arithmetic mean roughness of the light-diffusing sheet 1 on its lower side (the lower side of the light-diffusing sheet main body 2) and the arithmetic mean roughness thereof on the upper side (the surface of the light-transmitting electroconductive layer 3) is as follows. The arithmetic mean roughness on the lower side, serving as a light entrance side, may be made larger than the arithmetic mean roughness on the upper side, serving as a light emission side, by making the depth of the lower-side recesses and protrusions larger than the depth of the upper-side recesses and protrusions as shown in Fig. 1. Alternatively, the upper and lower sides may be made to have almost the same arithmetic mean roughness. Conversely, the arithmetic mean roughness on the lower side may be made smaller than the arithmetic mean roughness on the upper side.

On the other hand, it is desirable that the surface area ratio [the proportion of the actual surface area S of the measurement-side surface to the area So of the surface assumed to be flat (S/S₀)] for the surface having recesses and protrusions on each of the upper and lower sides of the light-diffusing sheet 1 should be in the range of 1.001-1.500, and that the surface area ratio for the upper side, serving as a light emission side, should be equal to or larger than the surface area ratio for the lower side, serving as a light entrance side.

This constitution has an advantage that a light is easily entered from the lower side and the light is emitted after having been considerably diffused by the upper side. The light-diffusing sheet 1 shown in Fig. 1 has a structure in which the distribution density of recesses and protrusions on the upper side has been regulated so as to be higher than the distribution density of recesses and protrusions on the lower side to thereby make the surface area ratio for the upper side larger than the surface area ratio for the lower side within the range of surface area ratios shown above. This light-diffusing sheet 1 thus has a constitution in which the amount of light entering from the lower side has been increased and even intense diffused light can be emitted from the upper side.

As the light-transmitting resin of the light-diffusing sheet main body 2 is advantageously used a thermoplastic resin having a high total light transmittance, such as a polycarbonate, polyester (e.g., poly(ethylene terephthalate), poly(butylenes terephthalate), poly(ethylene 2,6-naphthalate), an ethylene/1,4-cyclohexanedimethylene terephthalate copolymer, or the like), polyethylene, polypropylene, olefin copolymer (e.g., an ethylene/propylene copolymer, poly(4-methylpentene-1), or the like), polycycloolefin (a norbornene resin or the like), cycloolefin copolymer (e.g., an ethylene/norbornene copolymer or the like), poly(vinyl chloride), acrylic resin, polystyrene, polyamide (e.g., nylon-6, nylon-6,6, or the like), or ionomer.

Of these, polypropylene is advantageously used as a resin for producing a thin light-diffusing sheet 1. This is because polypropylene has advantages, for example, that polypropylene having an increased crystallinity has an improved modulus of elasticity to make the light-diffusing sheet main body 2 less apt to suffer thermal deterioration or rumpling, and that this polypropylene has an increased refractive index so that the difference in refractive index between the polypropylene and the light-diffusing agent is decreased, resulting in an increased amount of transmitted light and an improved luminance. In particular, polypropylene having a crystallinity of 40-80% not only has high rigidity but has a refractive index of about 1.48-1.52, which is close to the refractive index (1.54) of talc, which can be advantageously used as a light-diffusing agent and will be described later. Because of this, when this polypropylene is used in combination with talc to form a light-diffusing sheet main body 2, the light-diffusing sheet main body 2 obtained can attain a large amount of transmitted light and a high luminance. The crystallinity of polypropylene is more preferably 42-60%.

Polycarbonate is also preferably used because it has satisfactory heat resistance, high mechanical strength, satisfactory transparency, and rigidity. Polycarbonate is hence suitable for use as a light-diffusing sheet 1 which is to be incorporated into a direct type backlight unit including line light sources disposed right under the light-diffusing sheet 1 as shown in Fig. 6 and which should have a thickness of about 0.3-5 mm. In the case where a polycarbonate is used as a light-diffusing sheet 1 for illuminated signboards or illuminator covers, this light-diffusing sheet 1 has the advantage of being usable as part of structural members. Furthermore, acrylic resins, polycycloolefins, and the like also have high rigidity and highly satisfactory transparency and are hence preferably used as resins for light-diffusing sheets for use in direct type backlight units.

The light-diffusing agent to be incorporated into the light-diffusing sheet main body 2 serves mainly to diffuse light. In addition, the light-diffusing agent serves also to inhibit thermal expansion/contraction and prevent rumpling when the light-diffusing sheet 1 is thin. Particulate inorganic materials, particulate metal oxides, and particulate organic polymers which each differ in refractive index from the light-transmitting resin of the light-diffusing sheet main body 2 are used alone or in combination. As the particulate inorganic materials are used particles of glass, silica, mica, synthetic mica, calcium carbonate, magnesium carbonate, barium sulfate, talc, montmorillonite, kaolin clay, bentonite, hectorite, or the like. As the particulate metal oxides are used particles of titanium oxide, zinc oxide, alumina, or the like. As the particulate organic polymers are used particles of acrylic, styrene, benzoguanamine, or the like.

The inorganic particles, which have a low coefficient of linear expansion, are preferably used among those particulate materials from the standpoint of inhibiting the thermal expansion/contraction of the thin light-diffusing sheet main body 2. In particular, talc powders are preferred because they have an aspect ratio as large as 50-1,000 and are capable of reducing the coefficient of linear expansion of the light-diffusing sheet main body 2. When the light-transmitting resin is polypropylene, talc functions also as a nucleating agent for the resin, so that, fine and homogeneous disperse of crystal particles are obtained, while crystallinity of polypropylene is raised. Consequently, talc not only can reduce the coefficient of linear expansion but improve the modulus of elasticity and can improve the mechanical strength of the light-diffusing sheet main body 2 even when added in a small amount. For these and other reasons, talc powders are advantageously used.

Glass particles themselves have light-transmitting properties although they are inorganic particles. Because of this, glass particles do not inhibit light transmission and, even when incorporated in a large amount so as to reduce the coefficient of linear expansion, they neither reduce the amount of transmitted light nor reduce luminance. Glass particles hence are advantageously used. Of the glass particles, A-glass particles (soda-lime glass particles) can be significantly inhibited from reducing luminance and are advantageously used in the light-diffusing sheet 1, to which luminance is important.

On the other hand, acrylic particles are advantageously used because they themselves are transparent and do not reduce the amount of light transmission of the light-diffusing sheet 1. Acrylic particles are especially useful in sheets having a thickness of 0.3-10 mm, preferably 0.5-5 mm, in which the light being transmitted is repeatedly refracted many times in the light-diffusing sheet main body 2. In the case where the acrylic particles are incorporated into rigid light-transmitting resins such as polycarbonate resin, acrylic resin, or polycycloolefin, the necessity of taking account of thermal expansion/contraction is not so great. Combinations of acrylic particles and such resins are hence preferred.

Those light-diffusing agents to be used each have an average particle diameter of 0. 1-100 µm, preferably 0.5-80 µm, more preferably 1-50 µm. In case where the particle diameter of a light-diffusing agent is smaller than 0.1 µm, this light-diffusing agent has poor dispersibility because it is apt to aggregate. Even when this light-diffusing agent can be evenly dispersed, it has an impaired efficiency of light scattering because the wavelength of the light is longer. Consequently, it is preferred to use particles having a size of 0.5 µm or larger, preferably 1.0 µm or larger. On the other hand, in case where the particle diameter is larger than 100 µm, not only light scattering becomes uneven but also troubles arise, such as, e.g., a decrease in the amount of transmitted light or appearance of particles. Consequently, it is preferred to use particles having a size up to 80 µm, preferably a size up to 50 µm.

In the case where the light-diffusing agent is particles of an inorganic material other than glass, it is preferred to use particles having a small average particle diameter because the particles do not transmit light. Specifically, particles of 0.5-50 µm, especially 1-20 µm, are used. On the other hand, in the case where the light-diffusing agent is glass particles or organic polymer particles, it is preferred to use particles having a slightly large average particle diameter so as to prevent aggregation, because the particles transmit light. Specifically, particles of 1-100 µm, especially 3-80 µm, are used.

It is desirable that two or more of those light-diffusing agents differing in kind or average particle diameter be used in combination to thereby optimize luminance, the amount of transmitted light, etc.

The content of the light-diffusing agent in the light-diffusing sheet main body 2 is preferably regulated to 0.1-35% by mass. In case where the content thereof is lower than 0.1% by mass, this main body 2 shows insufficient light diffusion and poor hiding properties and the light-diffusing sheet 1 cannot have a haze of 30% or higher. In this case, there is a possibility that the dots formed in a lightguide plate, the line sources disposed right below, the light sources of a signboard, etc. might be seen. On the other hand, in case where the content thereof is 35% by mass or higher, the amount of the light transmitted by the light-diffusing sheet main body 2 is reduced due to the light scattering, reflection, and refraction caused by the light-diffusing agent. In this case, the light-diffusing sheet 1 cannot have a total light transmittance of 50% or higher and this arouses the following trouble. Even when the light-diffusing sheet 1 employing such a light-diffusing sheet main body 2 is incorporated, for example, into a backlight unit and the display is illuminated from the back side, images on the screen are difficult to be seen.

In the case where the light-diffusing agent is inorganic particles, e.g., talc, and the light-transmitting resin for use in the light-diffusing sheet main body 2 is polypropylene, it is preferred to regulate the content thereof to 15-35% by mass, more preferably 18-30% by mass. In case where the content of the inorganic particles is lower than 15% by mass, the inhibition of thermal expansion or contraction of the polypropylene is insufficient and this arouses a trouble that the sheet is apt to rumple. Especially when the light-diffusing sheet 1 is as thin as 30-200 µm, thermal expansion or contraction immediately influences the sheet and is causative of rumpling. It is therefore necessary to regulate the content of the light-diffusing agent to 15% by mass or higher.

On the other hand, in case where the content thereof exceeds 35% by mass, the proportion of the inorganic particles, which do not transmit light, is too large and the amount of light transmitted by the light-diffusing sheet main body 2 is reduced. Because of this, use of the light-diffusing sheet 1 employing such a light-diffusing sheet main body 2 arouses a trouble that images on the screen are difficult to be seen as in the case described above.

On the other hand, when the light-diffusing agent is organic polymer particles, e.g., acrylic particles, and the thickness of the light-diffusing sheet 1 is 0.3-10 mm, because this sheet has enhanced rigidity. As a result, the content of the organic polymer particles can be reduced to 0.1-20% by mass, more preferably 1-10% by mass. Even when the content thereof is thus reduced to 20% by mass or lower, troubles such as, e.g., rumpling caused by thermal expansion or contraction do not arise. In addition, the light-diffusing sheet 1 can have sufficient light-transmitting properties because the organic polymer particles transmit light and the content thereof is low. The light-transmitting resin in which these organic polymer particles are incorporated preferably is a resin having excellent heat resistance, such as a polycarbonate or a polycycloolefin, or a resin having excellent transparency, such as an acrylic.

The thickness of the light-diffusing sheet main body 2 is desirably regulated to from 30 µm to 10 mm. In case where the light-diffusing sheet main body 2 is thinner than 30 µm, this light-diffusing sheet main body 2 has reduced rigidity and is hence apt to cause rumpling although the amount of transmitted light and luminance increase. In addition, this main body 2 shows reduced light diffusion and hence has reduced hiding properties. Conversely, in case where the thickness of the light-diffusing sheet main body 2 exceeds 10 mm, the amount of transmitted light and luminance decrease although the light-diffusing sheet is inhibited from thermal expansion or contraction, does not rumple, and has improved hiding properties. Use of this light-diffusing sheet main body 2 hence makes it difficult to see images on the display, signboard, etc.

In the backlight unit of the edge light type shown in Fig. 1, the light-diffusing sheet main body 2 preferably has a thickness of 250 µm or smaller because the display to which this backlight unit is applied is required to be thin. The thickness thereof is more preferably 50-200 µm, even more preferably 70-180 µm. Such a thickness is effective in increasing the amount of transmitted light. The resin to be used for the main body 2 preferably is such as poly(ethylene terephthalate), polypropylene, or polycarbonate.

In the direct type backlight unit shown in Fig. 6, the thickness of the light-diffusing sheet main body 2 preferably is 0.3-10 mm because rigidity is required. The thickness thereof is more preferably 0.5-5 mm, even more preferably 1-3 mm. The resin to be used for the main body 2 preferably is a resin attaining a large amount of transmitted light, such as polycarbonate, acrylic, or polycycloolefin.

The light-transmitting electroconductive layer 3 described above, which has been laminated along the recesses and protrusions on the upper side, serving as a light emission side, of the light-diffusing sheet main body 2, is either one comprising a metal oxide layer or one comprising a layer containing ultrafine electroconductive fibers. This layer should have a surface resistivity of 10⁵ Ω/□ or lower. A layer having a surface resistivity higher than 10⁵ Ω/□ cannot exhibit sufficient electromagnetic shielding performance and, hence, cannot be employed in the invention. More preferably, the light-transmitting electroconductive layer 3 has a surface resistivity of 10⁴ Ω/□ or lower.

Incidentally, this light-transmitting electroconductive layer 3 may be formed on the lower side of the light-diffusing sheet main body 2 or on each of the upper and lower sides thereof.

As the metal oxide layer is used ITO (indium-tin oxide) , tin oxide, zinc oxide, or the like. Especially preferred is an ITO layer having a thickness of about 20-100 nm. This ITO layer not only has excellent light-transmitting properties, but also has a surface resistivity of about 10⁰-10³ Ω/□ and can exhibit satisfactory electromagnetic shielding performance. The metal oxide layer can be easily formed by depositing any of those metal oxides by vacuum deposition, sputtering, coating fluid application, etc.

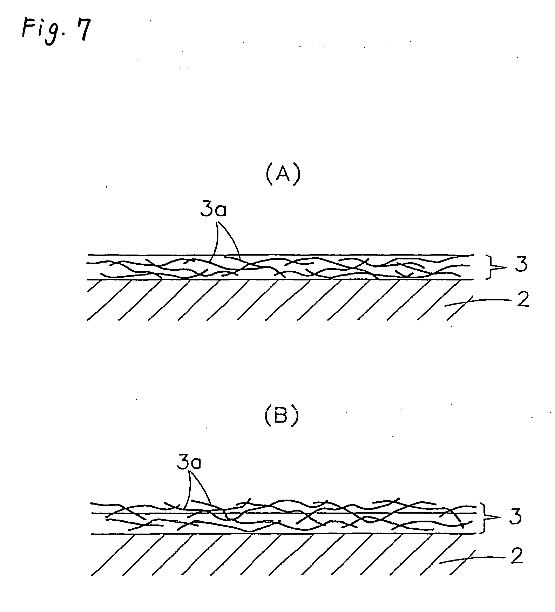

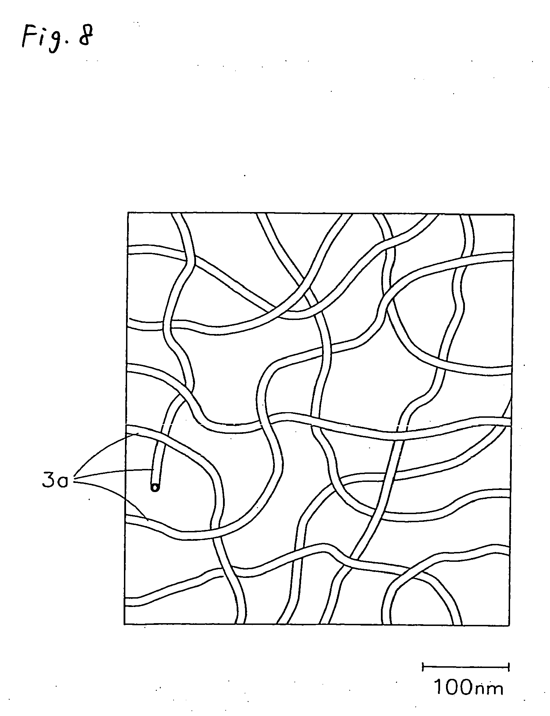

On the other hand, the light-transmitting electroconductive layer 3 comprising a layer containing ultrafine electroconductive fibers is preferably one in which the ultrafine electroconductive fibers 3a are in a dispersed state without aggregating and are in contact with one another as shown in Fig. 7 and Fig. 8. In other words, the ultrafine electroconductive fibers 3a preferably are in contact with one another in such a state that the individual fibers have been dispersed separately from one another without intertwining or that bundles each composed of ultrafine electroconductive fibers have been dispersed separately from one another. When the light-transmitting electroconductive layer 3 is constituted mainly of ultrafine electroconductive fibers 3a and a transparent binder, then the ultrafine electroconductive fibers 3a are in contact with one another in that above stateddispersed state within the binder as shown in Fig. 7 (A) , or the ultrafine electroconductive fibers 3a are in contact with one another in that above stated dispersed state, with part of the ultrafine electroconductive fibers 3a embedded in the binder and the remainder protruded from or exposed on the binder surface, as shown in Fig. 7 (B). Alternatively, the ultrafine electroconductive fibers 3a are in contact with one another in such a state that part of the ultrafine electroconductive fibers 3a are dispersed within the binder as shown in Fig. 7 (A) and the other ultrafine electroconductive fibers 3a are dispersed while being protruded from or exposed on the surface as shown in Fig. 7 (B).

The dispersed state of these ultrafine electroconductive fibers 3a viewed from above is diagrammatically shown in Fig. 8. As can be understood from Fig. 8, the individual ultrafine electroconductive fibers 3a or the individual bundles are somewhat bend but have been dispersed separately from one another and are in contact with one another at the intersections without complicatedly intertwining, i.e., without aggregating, in the state of simply intersecting with one another within the light-transmitting electroconductive layer 3 or on the surface thereof, although the fibers 3a are slightly bent. When the ultrafine electroconductive fibers 3a have been thus dispersed, the fibers are looser and present in a wider range as compared with aggregated fibers. Because of this, the chance of contact among these fibers is considerably increased and, as a result, electrical conduction is established and electrical conductivity can be greatly enhanced. In case where ultrafine electroconductive fibers are dispersed without getting loose, the fibers should be incorporated in a large amount for obtaining a surface resistivity of 10⁵ Ω/□ or lower and this results in coloration of the electroconductive layer and impaired light-transmitting properties. In contrast, when the ultrafine electroconductive fibers 3a are in the dispersed state described above, the same chance of contact can be obtained even with a reduced amount of the ultrafine electroconductive fibers 3a. Namely, the amount of the ultrafine electroconductive fibers 3a can be reduced accordingly. As a result, transparency improves by a degree corresponding to the reduction in the amount o'f the ultrafine electroconductive fibers 3a, which impair transparency. In addition, the light-transmitting electroconductive layer 3 can be formed more thinly and transparency can hence be further improved.

Incidentally, the ultrafine electroconductive fibers 3a need not be in such a state that the individual fibers or bundles have been completely dispersed separately from one another, and may partly include minute aggregates made up of intertwined fibers. However, the size of these aggregates preferably is not 0. 5 µm or larger in terms of average diameter.

The ultrafine electroconductive fibers 3a to be used in the light-transmitting electroconductive layer 3 preferably are electroconductive ultrafine fibers having a diameter of 0.3-100 nm, such as ultrafine long carbon fibers such as carbon nanotubes, carbon nanohorns, carbon nanowires, carbon nanofibers, and graphite fibrils, ultrafine long metal fibers such as nanotubes or nanowires of a metal such as platinum, gold, silver, nickel, or silicon, and ultrafine long metal oxide fibers such as nanotubes or nanowires of a metal oxide such as zinc oxide. These electroconductive ultrafine fibers desirably have a length of 0.1-20 µm, preferably 0.1-10 µm. These ultrafine electroconductive fibers 3a are dispersed so that the individual fibers or individual bundles are separated from one another without aggregating. As a result, when the surface resistivity of the light-transmitting electroconductive layer 3 obtained is 10⁰-10² Ω/□, this layer has a light transmittance of 50% or higher. When the surface resistivity thereof is 10²-10³ Ω/□, the layer has a light transmittance of 75% or higher. When the surface resistivity thereof is 10³-10⁵ Ω/□, the layer has a light transmittance of 88% or higher. The light transmittance means the transmittance of light having a wavelength of 550 nm and is measured with a spectrophotometer.

Of these ultrafine electroconductive fibers 3a, carbon nanotubes are especially preferred in obtaining a light-transmitting electroconductive layer 2 having a light transmittance of 50% or higher. This is because carbon nanotubes have a diameter as small as 0.3-80 nm and, hence, the inhibition of light transmission by the carbon nanotubes is diminished by dispersing the nanotubes so as to separate the individual fibers or individual bundles from one another. These carbon nanotubes also are in contact with one another in such a state that the individual carbon nanotubes or the individual bundles each composed of plural carbon nanotubes have been dispersed, without aggregating, within the light-transmitting electroconductive layer 3 or on the surface thereof to thereby secure electrical conduction. Because of this, by incorporating the carbon nanotubes 3a into a light-transmitting electroconductive layer 3 in an amount corresponding to an estimated content of 20-450 mg/m², the surface resistivity of the layer can be controlled at will so as to be 10⁵ Ω/□ or lower. The estimated content is a value determined by examining the light-transmitting electroconductive layer 3 with an electron microscope to determine the proportion of the area of the carbon nanotubes 3a to the planar area of the layer 3 and multiplying this proportion by the thickness measured through examination with the electron microscope and by the specific gravity of the carbon nanotubes (as the value of specific gravity was employed 2.2, which is the average of the values 2.1-2.3 for graphite found in the literature).

The term "without aggregating" means that when the light-transmitting electroconductive layer 3 is examined with an optical microscope to measure the major-axis length and minor-axis length of any aggregate, then the layer 3 contains no aggregate larger than 0.5 µm in terms of the average of these lengths.

Examples of the carbon nanotubes include multilayered carbon nanotubes comprising cylindrically closed carbon walls differing in diameter and concentrically arranged around a central axis and single-layer carbon nanotubes comprising a single cylindrically closed carbon wall surrounding a central axis. The former carbon nanotubes, i.e., multilayered ones, preferably are in contact with one another in such a state that the individual nanotubes have been dispersed separately from one another, while the latter carbon nanotubes, i.e., single-layer ones, preferably are in contact with one another in such a state that bundles each composed of plural single-layer carbon nanotubes have been dispersed separately from one another. This is because the carbon nanotubes in these states bring about a surface resistivity of 10⁵ Ω/□ or lower simultaneously with an increase in the amount of transmitted light.

The former carbon nanotubes, i.e., multilayered ones, each are constituted of tubes which consist of cylindrically closed carbon walls differing in diameter and have been laminated so as to form a multilayer structure surrounding a central axis. These carbon walls are constituted of the hexagonal network structure of carbon graphite. A preferred multilayered carbon nanotube is one made up of , 20-30 overlapped layers, more preferably 2-15 overlapped layers of such carbon wall. As long as the number of layers overlapped is within this range, the number of the walls is small and the amount of transmitted light can be increased. As shown in Fig. 8, these multilayered carbon nanotubes have been mostly dispersed in the light-transmitting electroconductive layer 3 separately from one another and are in contact with one another at the intersections in the state of simply intersecting with one another without complicatedly intertwining.

Some of 2- or 3-layered carbon nanotubes have been separated from one another, while others have been dispersed in the state of bundles of such nanotubes. Such carbon nanotubes should not be excluded.

On the other hand, single-layer carbon nanotubes each are constituted of a cylindrically closed single-layer carbon wall surrounding a central axis. This carbon wall also is constituted of the hexagonal network structure of carbon graphite. Such single-layer carbon nanotubes are hardly present separately from one another and are present in the state of bundles each composed of two or more such carbon nanotubes. As shown in Fig. 8, these bundles have been mostly dispersed in the light-transmitting electroconductive layer 3 separately from one another and are in contact with one another at the intersections in the state of simply intersecting with one another without complicatedly intertwining. Single-layer carbon nanotubes in the form of bundles each made up of 10-50 single-layer carbon nanotubes are advantageously used. In the invention, single-layer carbon nanotubes dispersed separately from one another should not be excluded.

When carbon nanotubes have been dispersed, without intertwining, in the light-transmitting electroconductive layer 3 and are in contact with one another as described above, sufficient electrical conduction among the carbon nanotubes is secured even when the thickness of the light-transmitting electroconductive layer 3 is considerably reduced. This light-transmitting electroconductive layer 3 can hence have a surface resistivity reduced to 10⁵ Ω/□ or lower. Specifically, in the case where the content of carbon nanotubes is regulated to 20-450 mg/m², the light-transmitting electroconductive layer 3 can have a surface resistivity in the range of 10⁰-10⁵ Ω/□ even when the thickness thereof is reduced to as small as 10-400 nm so as to improve light-transmitting properties. Furthermore, even when the content thereof is reduced to 20-250 mg/m², a surface resistivity of 10²-10⁵ Ω/□ is obtained. Thus, satisfactory electromagnetic shielding performance comes to be exhibited.

For imparting better electromagnetic shielding performance and light-transmitting properties through incorporation of a large amount of carbon nanotubes into the light-transmitting electroconductive layer 3, it is preferred to enhance the dispersibility of the carbon nanotubes. For attaining this, it is preferred to employ carbon nanotubes having a diameter and a length which make the carbon nanotubes have excellent dispersibility and to use a dispersant in combination therewith. Multilayered carbon nanotubes having an outer diameter of 1-20 nm and an aspect ratio of 50-10, 000, especially ones having an outer diameter of 5-15 nm and an aspect ratio of 100-1,000, have excellent dispersibility. On the other hand, single-layer carbon nanotubes in which the bundles have an outer diameter of 1-20 nm and a length of 0. 1-10 µm, especially ones in which the bundles have an outer diameter of 5-15 nm and a length of 0.5-5 µm, have excellent dispersibility.

The dispersant to be added to the light-transmitting electroconductive layer 3 preferably is a polymeric dispersant, such as a solution of an alkylammonium salt of an acid polymer, an acrylic copolymer modified with a tertiary amine, a polyoxyethylene/polyoxypropylene copolymer, or a coupling agent, or the like. The amount of the dispersant to be added is about 5-85% by mass, preferably about 10-40% by mass, based on the carbon nanotubes.

The light-transmitting electroconductive layer 3 comprising carbon nanotubes may be a layer consisting of carbon nanotubes only. It is, however, preferred to dispersedly incorporate carbon nanotubes into a binder resin or fix carbon nanotubes with a binder resin. As this binder resin is used a thermoplastic resin, e.g., a light-transmitting thermoplastic resin of the same kind as that constituting the light-diffusing sheet main body 2 described above, or a light-transmitting thermoplastic resin different from but compatible with that resin, or a light-transmitting curable resin. Preferred light-transmitting binder resins are thermoplastic resins such as poly(vinyl chloride), vinyl chloride/vinyl acetate copolymers, poly (methyl methacrylate) , nitrocellulose, chlorinated polyethylene, chlorinated polypropylene, and vinylidene fluoride and transparent curable resins which cure with heat, ultraviolet, electron beams, a radiation, etc., such as melamine acrylates, urethane acrylates, epoxy resins, polyimide resins, and silicone resins such as acrylic-modified silicates. The light-transmitting electroconductive layer 3 comprising any of these transparent binders and the carbon nanotubes has been formed so as to be a transparent layer. Incidentally, an inorganic material such as colloidal silica may be added to these binders. When a curable resin or a binder containing colloidal silica is used as a binder, an electromagnetic-shielding light-diffusing sheet excellent in wearing resistance and other properties can be obtained. Since the light-transmitting electroconductive layer 3 is formed on a surface of the light-diffusing sheet main body 2, it is desirable to select and use a binder suitable for the desired properties such as weatherability, surface hardness, and wearing resistance, as in the case described above.

Incidentally, particles of an electroconductive metal oxide, e.g., tin oxide, may be incorporated into the light-transmitting electroconductive layer 3 containing ultrafine electroconductive fibers such as carbon nanotubes, as long as these particles do not impair transparency. Furthermore, additives such as an ultraviolet absorber, surface modifier, and stabilizer may be suitably added to improve weatherability and other performances.

The light-diffusing sheet 1 described above can be produced, for example, by the following methods. In the following production methods, when fine recesses and protrusions are not formed on the surfaces of the light-diffusing sheet 1, rolls or press plates having a smooth surface may be used in place of embossing rolls or press plates with fine recesses and protrusions.

In one method, a light-transmitting resin containing a light-diffusing agent dispersed therein is first extrusion-molded into a sheet, and this sheet is passed through the nip between a pair of embossing rolls or pressed with press plates having fine recesses and protrusions. Thus, a light-diffusing sheet main body 2 having fine recesses and protrusions on each of the upper and lower sides thereof is produced. A light-transmitting electroconductive layer 3 is then formed on one side of this light-diffusing sheet main body 2 by depositing a metal oxide, e.g., ITO, through vapor deposition, sputtering, or coating fluid application or by applying and solidifying a resinous coating fluid prepared by dispersing ultrafine electroconductive fibers 3a. Thus, a light-diffusing sheet 1 is produced.

In another method, a light-transmitting resin containing a light-diffusing agent dispersed therein is extrusion-molded into a sheet to produce a light-diffusing sheet main body having no recesses and protrusions on each side. An electroconductive film having a layer of a metal oxide, e.g., ITO, or having a layer containing ultrafine electroconductive fibers is laminated on the light-diffusing sheet main body and is bonded thereto by hot-pressing this assemblage with press plates having fine recesses and protrusions. Alternatively, a resinous coating fluid containing ultrafine electroconductive fibers dispersed therein is applied to the upper side of the light-diffusing sheet main body and solidified. Thus, a light-transmitting electroconductive layer 3 is formed. Thereafter, the resultant structure is pressed with embossing rolls or press plates having fine recesses and protrusions to thereby produce a light-diffusing sheet 1.

In still another method, a light-transmitting resin containing a light-diffusing agent dispersed therein is extrusion-molded into a sheet to thereby obtain a light-diffusing sheet main body having, on each of the upper and lower sides thereof, fine recesses and protrusions caused thereto by the light-diffusing agent present on or near the surface. A light-transmitting electroconductive layer 3 is then formed on one side of this light-diffusing sheet main body 2 by depositing a metal oxide, e.g., ITO, through vapor deposition, sputtering, or coating fluid application or by applying and solidifying a resinous coating fluid prepared by dispersing ultrafine electroconductive fibers. Thus, a light-diffusing sheet 1 is produced.

In a further method, a light-transmitting resin containing a light-diffusing agent dispersed therein is extrusion-molded into a sheet to produce a light-diffusing sheet main body having no recesses and protrusions on each side. Simultaneously therewith, a light-transmitting electroconductive layer 3 is formed on an adhesive resin film by the method shown above to produce an electroconductive film. This electroconductive film is laminated on the light-diffusing sheet main body by, e.g., laminating. Thereafter, the resultant structure is pressed with embossing rolls or press plates having fine recesses and protrusions to thereby produce a light-diffusing sheet 1.

In each of these production methods, the light-transmitting electroconductive layer 3 containing ultrafine electroconductive fibers is formed by applying a resinous coating fluid to the light-diffusing sheet main body 2 and solidifying the coating fluid. However, methods for forming the layer 3 should not be construed as being limited to that one. For example, a light-transmitting electroconductive layer 3 can be formed also by preparing a coating fluid by dispersing ultrafine electroconductive fibers 3a in a solvent, applying the coating fluid to the light-diffusing sheet main body 2 and drying it, and then applying a binder resin solution on the resultant coated film and drying it to thereby fix the ultrafine electroconductive fibers 3a.

The light-diffusing sheet 1 obtained by any of the methods described above has satisfactory transparency with a total light transmittance in the range of 50-95% and further has satisfactory light-diffusing properties with a haze in the range of 30-95%. When the light-diffusing sheet 1 having such properties is incorporated, for example, between the lightguide plate 5 and lens film 6 of the backlight unit for edge light type displays which is shown by the imaginary lines in Fig.1, then almost all of the light incident on the lightguide plate 5 from the light source 7 almost evenly enters the light-diffusing sheet main body 2 through the whole lower side of the light-diffusing sheet 1. This is because the lower side of the light-diffusing sheet 1, which serves as a light entrance side, has an arithmetic mean roughness Ra and a surface area ratio which are suitable for light entrance, due to the formation of recesses and protrusions as described above. The light which has thus entered is diffused by the light-diffusing agent present in the light-diffusing sheet main body 2 and further diffused by the recesses and protrusions on the upper side of the light-diffusing sheet main body 2 and by the surface of the light-transmitting electroconductive layer 3 which has been formed so as to have recesses and protrusions conforming to those recesses and protrusions, before being emitted toward the lens film 6. As stated above, the light emission side of this light-diffusing sheet 1 has an arithmetic mean roughness Ra suitable for light diffusion and a larger surface area ratio than the lower side due to the formation of recesses and protrusions. Because of this, light diffusion is intense and even. Consequently, this light-diffusing sheet 1 has a reduced light loss, can emit even scattered light, has no local unevenness of luminance, and has satisfactory hiding properties to prevent the dots or the like on the lightguide plate 5 from being seen. In addition, even in the case where this light-diffusing sheet 1 is as thin as 30-200 µm, incorporation of 15-35% by mass light-diffusing agent into the light-diffusing sheet main body 2 has enabled the light-diffusing sheet main body 2 to have a reduced coefficient of linear expansion and an improved modulus of elasticity. Because of this, even when the backlight unit heats up, this sheet is inhibited from thermally expanding or contracting and does not rumple.

Furthermore, this light-diffusing sheet 1 exhibits electromagnetic shielding performance due to the light-transmitting electroconductive layer 3 having a surface resistivity of 10⁵ Ω/□ or lower. This sheet hence can shield from electromagnetic waves generated by the backlight, backlight driving circuit, etc.

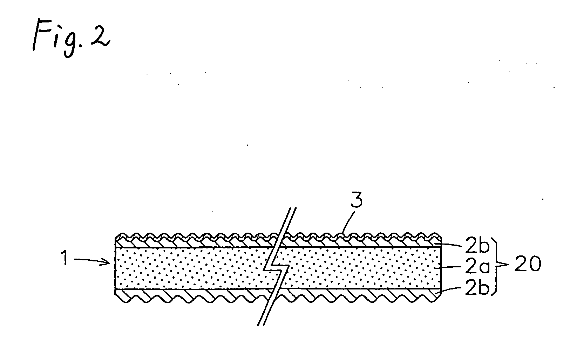

Fig. 2 is a sectional view of an electromagnetic-shielding light-diffusing sheet according to another embodiment of the invention.

This light-diffusing sheet 1 differs from the light-diffusing sheet shown in Fig. 1 described above, in that a multilayered sheet having a three-layer structure is employed as a light-diffusing sheet main body 20. Specifically, this multilayered sheet is produced by laminating surface layers 2b and 2b each made of a light-transmitting resin respectively on the upper and lower sides of a core layer 2a made of a light-transmitting resin containing a light-diffusing agent in an amount of 0.1-35% by mass and forming fine recesses and protrusions on each of the upper and lower sides of the resultant structure.

Incidentally, a surface layer 2b may be formed only on one side of the core layer 2a. The fine recesses and protrusions need not be always formed.

The core layer 2a of this light-diffusing sheet main body 20 is the same as the light-diffusing sheet main body 2 described above, and the light-transmitting resin and light-diffusing agent used therein may be the same as those used in the light-diffusing sheet main body 2 described above. The content of the light-diffusing agent is regulated to 15-35% by mass as in the light-diffusing sheet main body 2 described above, in order to increase the transmitted-light amount and light-diffusing properties of the core layer 2a and for the purpose of attaining a reduction in the coefficient of linear expansion and an improvement in the modulus of elasticity in the case where the core layer 2a is as thin as 30-200 µm.

On the other hand, the surface layers 2b and 2b of this light-diffusing sheet main body 20 are layers of a light-transmitting resin containing no light-diffusing agent. The coating of both sides of the core layer 2a with the surface layers 2b and 2b is intended to prevent the light-diffusing agent from falling off from the light-diffusing sheet 1 or to prevent the lightguide plate or lens film of the backlight unit from being damaged. Furthermore, a surface layer 2b containing an ultraviolet absorber can be formed in order to inhibit the light-diffusing sheet 1 from being deteriorated by light. In addition, during production, the surface layers 2b and 2b serve to prevent adhering of light-diffusing agent to around the extrusion orifice when the light-diffusing sheet main body 20 is molded by three-layer coextrusion molding in the manner which will be described later. Consequently, the surface layers 2b and 2b should have a thickness which enables the layers to coat the light-diffusing sheet main body 20 and produce the effects shown above. It is therefore necessary to regulate the thickness thereof to 4 µm or larger. The thickness of the surface layers 2b is preferably 4-200 µm. When the light-diffusing sheet 1 has a thickness of 30-200 µm, the thickness of the surface layers 2b is regulated to about 4-50 µm, preferably about 5-30 µm, more preferably about 6-10 µm. When the light-diffusing sheet 1 has a thickness of 0.3-10 mm, the thickness of the surface layers 2b is regulated to about 20-200 µm, preferably about 30-100 µm. In case where the surface layers 2b are thinner than 4 µm, the coating of the light-diffusing sheet main body 20 is insufficient. Conversely, even when the surface layers 2b are formed so as to be thicker than 200 µm, the effects brought about thereby are not matching to the thickness. Furthermore, in case where the proportion of the thicknesses of the surface layers 2b to the thickness of the light-diffusing sheet 1 is too large, thermal expansion or contraction cannot be inhibited, which rather may cause rumple. It is therefore desirable to regulate the thickness of the surface layers 2b to 50 µm or smaller especially when the thickness of the light-diffusing sheet 1 is 30-200 µm.

As the light-transmitting resin for forming the surface layers 2b is used the same light-transmitting resin as that constituting the core layer 2a or one compatible with that resin. In the case where a resin compatible with the core layer 2a is selected as the resin constituting the surface layers 2b, it is desirable that the resin selected for the surface layers 2b should have a lower refractive index than the resin constituting the core layer 2a. When a resin is thus selected, the difference in refractive index between air and the resin constituting the surface layers 2b becomes smaller than the difference in refractive index between air and the resin constituting the core layer 2a. Because of this, the amount of transmitted light for the whole light-diffusing sheet 1, when light enters from air, passes through the surface layers 2b and the core layer 2a, and is emitted into air on the opposite side, is larger than the amount of transmitted light in the case where light passes through a light-diffusing sheet 1 consisting only of the core layer 2a. Namely, the amount of transmitted light increases accordingly. As a result, luminance can be increased. In the case where a surface layer 2b has been formed only on one side of the core layer 2a, the effect described above is obtained when this surface layer 2b is used on the light entrance side.

With respect to combinations of the light-transmitting resins comprising the core layer 2a and surface layers 2b, a most preferred combination is, for example, one in which the light-transmitting resin constituting the core layer 2a is a polycarbonate resin and the light-transmitting resin comprising the surface layers 2b is an acrylic resin having a refractive index (1.49) lower than the refractive index (1.58) of the polycarbonate resin. This combination has the following advantages. The two resins each are a resin which itself has a large transmitted-light amount, and the acrylic resin is a resin having excellent light resistance. In addition, since the difference in refractive index between air and the acrylic resin, the difference in refractive index between the acrylic resin and the polycarbonate resin, and the difference in refractive index between the polycarbonate resin and air are 0.49, 0.09, and 0.58, respectively, the light-diffusing sheet 1 has a light transmittance of 91.2% (theoretical value). This value is higher by 1.1% than the light transmittance (90.1%) in light transmission through the core layer 2a only. An increase in luminance can hence be attained.

As the ultraviolet absorber to be incorporated into a surface layer 2b can be advantageously used a known benzotriazole type ultraviolet absorber, benzophenone type ultraviolet absorber, or the like. Besides these, ultraviolet absorbers such as triazine type may be used. When incorporated into a backlight unit or the like, the light-diffusing sheet 1 is deteriorated by the light from the light source and is thus colored (yellowed). For preventing this, it is preferred to incorporate an ultraviolet absorber into a surface layer 2b to inhibit coloration and thereby obtain long-lasting excellent light transmission and luminance. An ultraviolet absorber may be incorporated also into the core layer 2a.

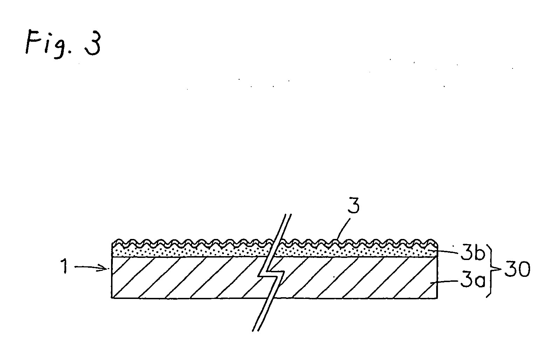

Fig. 3 is a sectional view of an electromagnetic-shielding light-diffusing sheet according to another embodiment of the invention.

This light-diffusing sheet 1 differs from the light-diffusing sheet shown in Fig. 1 described above, in that a multilayered sheet having a two-layer structure is employed as a light-diffusing sheet main body 30. Specifically, this multilayered sheet is produced by laminating a surface layer 3b made of a light-transmitting resin containing a light-diffusing agent on the upper side of a core layer 3a made of a light-transmitting resin containing no light-diffusing agent and forming fine recesses and protrusions on the surface of the surface layer 3b.

Incidentally, the fine recesses and protrusions formed on the surface layer 3b are not always necessary, and the surface of the surface layer 3b may be flat. Conversely, fine recesses and protrusions may be formed on the lower side of the core layer 3a. A surface layer 3b may be laminated also on the lower side of the core layer 3a, besides being formed on the upper side, to thereby form a three-layer structure. In this case, it is preferred to regulate the content of the light-diffusing agent in the lower-side surface layer 3b so as to be lower than that in the upper-side surface layer 3b because this structure enables a larger amount of light to enter.

For the core layer 3a of this light-diffusing sheet main body 30 is used the same light-transmitting resin as that used in the light-diffusing sheet main body 2 described above. This core layer 3a contains no light-diffusing agent.

On the other hand, the surface layer 3b comprises a layer of a light-transmitting resin containing a light-diffusing agent. One side of the core layer 3a is coated with this layer to thereby conduct light diffusion. The light-transmitting resin and light-diffusing agent to be used for this surface layer 3b may be the same as those described above. However, the content of the agent should be as high as 5-60% by mass. This is because the thickness of the surface layer 3b is 4-200 µm, which is thinner than the core layer 3a, and it is therefore desirable to incorporate the light-diffusing agent in an amount within that above range for enabling the surface layer 3b, which has that thickness, to perform sufficient light diffusion and provide hiding properties. Because the light-diffusing agent is contained in a large amount, the fine recesses and protrusions of the surface layer 3b are formed by the light-diffusing agent present near the surface. This does not exclude the formation of recesses and protrusions with an embossing roll or the like.

It is desirable that an ultraviolet absorber should be incorporated into the core layer 3a and/or the surface layer 3b to inhibit discoloration.

The other constitutions, i.e., the light-diffusing agent, light-transmitting resin, fine recesses and protrusions of the surface layer 3b, and light-transmitting electroconductive layer 3, are the same as in the embodiments described above. An explanation thereon is hence omitted.

The light-diffusing sheet 1 described above is produced in the following manner. For example, a two-layer coextrusion molding machine is used to extrude a light-transmitting resin containing no light-diffusing agent into a sheet and simultaneously extrude thereover a light-transmitting resin containing a light-diffusing agent in an amount of 5-60% by mass. Thus, a light-diffusing sheet main body 30 consisting of a two-layer sheet composed of a core layer 3a and a surface layer 3b laminated thereon is produced. A light-transmitting electroconductive layer 3 is then formed on one side of the main body 30 in the same manner as in any of the production methods described above. The light-diffusing sheet 1 is thus produced.

Also, the light-diffusing sheet 1 can be produced by extrusion-molding a light-transmitting resin containing no light-diffusing agent into a sheet to produce a core layer 3a, separately producing a resin film containing a light-diffusing agent and further producing a light-transmitting resin film having on one side thereof a light-transmitting electroconductive layer 3 formed in the same manner as any of those described above, and piled up this light-transmitting resin film on the core layer 3a in such a manner that the light-transmitting electroconductive layer 3 faces outward to thereby laminate the core layer 3a, surface layer 3b, and light-transmitting electroconductive layer 3.

Furthermore, the light-diffusing sheet 1 may be produced by extrusion-molding a transparent resin containing no light-diffusing agent into a sheet to produce a core layer 3a, applying a resinous coating fluid containing a light-diffusing agent to one side of the core layer 3a and solidifying it to form a surface layer 3b and thereby produce a light-diffusing sheet main body 30, and forming a light-transmitting electroconductive layer 3 on the upper side of the surface layer 3b in the same manner as any of those described above.

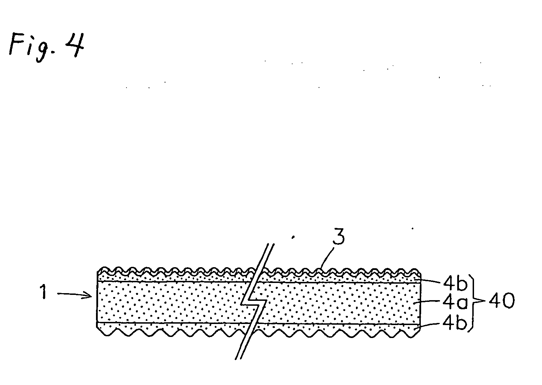

Fig. 4 is a sectional view of an electromagnetic-shielding light-diffusing sheet according to still another embodiment of the invention.

This light-diffusing sheet 1 differs from the light-diffusing sheet shown in Fig. 1 described above, in that a multilayered sheet having a three-layer structure is employed as a light-diffusing sheet main body 40. Specifically, this multilayered sheet is produced by forming a core layer 4a made of a light-transmitting resin containing a light-diffusing agent in an amount of 0.1-35% by mass, laminating surface layers 4b and 4b respectively on the upper and lower sides of the core layer 4a, the surface layers 4b and 4b being made of a transparent resin which contains 0.1-35% by mass light-diffusing agent different from that in the core layer 4a or contains the same light-diffusing agent as that in the core layer in an amount different from that in the core layer but in the range of 0.1-35% by mass, and forming fine recesses and protrusions on the surfaces of the surface layers 4b and 4b.

The light-transmitting resins and light-diffusing agents to be used for this light-diffusing sheet 1 are the same as those described above. However, it is desirable that different light-diffusing agents be incorporated respectively into the core layer 4a and the surface layers 4b in an amount in the range of 0.1-35% by mass, or that in the case of using the same light-diffusing agent, this agent be incorporated into the core layer 4a and the surface layers 4b in different amounts.

For example, it is desirable that a talc light-diffusing agent be incorporated into the core layer 4a in an amount in the range of 0.1-35% by mass, preferably 5-30% by mass, and a glass light-diffusing agent be incorporated into the surface layers 4b and 4b in an amount in the range of 0.1-35% by mass, preferably 15-35% by mass. Or, it is desirable that a glass light-diffusing agent be incorporated into the core layer 4a and the surface layers 4b in different amounts in the ranges of 15-35% by mass for the core layer 4a and 5-35% by mass for the surface layers 4b.

By thus incorporating a light-diffusing agent into the core layer 4a and the surface layers 4b, not only the thermal expansion/contraction of the light-diffusing sheet main body 40 can be reduced to inhibit rumpling, but also the layers 4a and 4b each can function to diffuse light due to the light-diffusing agent contained therein, resulting in enhanced hiding properties. In particular, when a talc light-diffusing agent having a large aspect ratio is incorporated into the core layer 4a and a light-transmitting glass light-diffusing agent is incorporated into the surface layers 4b, then thermal expansion/contraction can be inhibited by the talc light-diffusing agent contained in the core layer 4a and also by the glass particles contained in the surface layers 4b, whereby this light-diffusing sheet 1 can be prevented from rumpling. Hiding properties also can be imparted. In addition, since the glass light-diffusing agent in the surface layers 4b does not impair such light-transmitting properties, a light-diffusing sheet main body 40 having sufficient light-transmitting properties can be obtained.

The other constituents, i.e., the light-transmitting electroconductive layer 3 and the fine recesses and protrusions, are the same as described above, and an explanation thereon is hence omitted. Incidentally, the fine recesses and protrusions are not always necessary, and the surfaces may be made flat. Furthermore, a surface layer may be formed on one side only, and the light-transmitting electroconductive layer 3 may be formed on the other side.

The light-diffusing sheet 1 described above is produced in the following manner. For example, a three-layer coextrusion molding machine is used to extrude a light-transmitting resin containing a light-diffusing agent in an amount of 0.1-35% by mass into a sheet and simultaneously extrude a light-transmitting resin containing a light-diffusing agent in an amount of 0.1-35% by mass so that sheets of the latter resin are laminated respectively on the upper and lower sides of former sheet. Thus, a light-diffusing sheet main body 40 comprising a three-layer sheet composed of a core layer 4a and surface layers 4b and 4b laminated on the upper and lower sides thereof is produced. A light-transmitting electroconductive layer 3 is then formed on one side of the main body 40 in the same manner as in any of the production methods described above. The light-diffusing sheet 1 is thus produced.

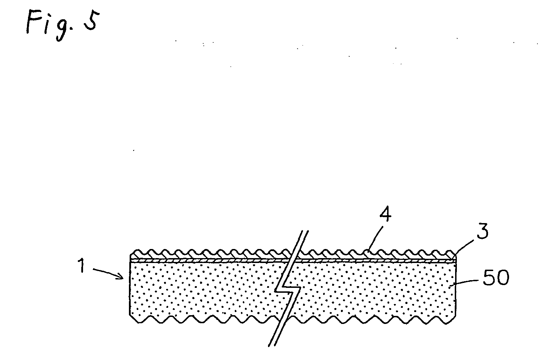

Fig. 5 is a sectional view of an electromagnetic-shielding light-diffusing sheet according to a further embodiment of the invention.

This light-diffusing sheet 1 is produced by forming a light-diffusing sheet main body 50 comprising a single-layer sheet of a light-transmitting resin containing a light-diffusing agent in an amount of 0.1-35% by mass, laminating a light-transmitting electroconductive layer 3 on the flat upper side of the main body 50, laminating a light-transmitting resin cover layer 4 with which the light-transmitting electroconductive layer 3 is covered, and forming fine recesses and protrusions on the lower side of the light-diffusing sheet main body 50 and on the upper side of the light-transmitting resin cover layer 4.

The light-transmitting resin cover layer 4 is a layer made of a light-transmitting resin containing no light-diffusing agent, and serves to protect the light-transmitting electroconductive layer 3 from marring. As the light-transmitting resin constituting this cover layer 4 may be used any of the same light-transmitting resins as those for constituting the light-diffusing sheet main body 2 or core layer 2a in the light-diffusing sheets described above. Also usable besides these are hard coating resins such as silicones, urethane acrylates, and the like. The thickness of this cover layer 4 is regulated to desirably about 4-50 µm, preferably about 5-30 µm.

The light-diffusing sheet main body 50 and the light-transmitting electroconductive layer 3 are the same as the light-diffusing sheet main body 2 and light-transmitting electroconductive layer 3 in the light-diffusing sheet 1 described above. The arithmetic mean roughnesses and surface area ratios for the lower side of this light-diffusing sheet 1 and the upper side of the light-transmitting resin cover layer 4 also are the same as those for the upper and lower sides of the light-diffusing sheet main body 2 in the light-diffusing sheet 1 described above.

Like the light-diffusing sheets described above, this light-diffusing sheet 1 having such constitution has the effects of having a large transmitted-light amount, being capable of emitting even high-luminance diffused light, having satisfactory hiding properties, and exhibiting sufficient electromagnetic shielding performance. Besides having these effects, this light-diffusing sheet 1 has an effect that the light-transmitting resin cover layer 4 protects the light-transmitting electroconductive layer 3 from marring.

The light-diffusing sheet 1 described above can be produced, for example, by a method which comprises extrusion-molding a light-transmitting resin containing a light-diffusing agent into a sheet to produce a light-diffusing sheet main body 50, laminating a light-transmitting resin film having a light-transmitting electroconductive layer 3 formed on one side thereof (resin film to serve as a light-transmitting resin cover layer 4) on the light-diffusing sheet main body 50 so that the light-transmitting electroconductive layer 3 faces the light-diffusing sheet main body, and hot-pressing and bonding the resultant assemblage with, e.g., embossing rolls or press plates having fine recesses and protrusions.

It is a matter of course that the light-transmitting resin cover layer 4 to be laminated on the surface of the light-transmitting electroconductive layer 3 in this light-diffusing sheet may be laminated on the surface of the light-transmitting electroconductive layer 3 of each of the light-diffusing sheets respectively shown in Figs. 1, 2, 3, and 4. Furthermore, the fine recesses and protrusions on the surface of the light-transmitting resin cover layer 4 are not always necessary, and this layer 4 may have a flat surface.

Fig. 6 is a sectional view of an electromagnetic-shielding light-diffusing sheet according to still a further embodiment of the invention.

This light-diffusing sheet 1 differs from the light-diffusing sheet 1 shown in Fig. 1 described above, in that the light-diffusing sheet main body 60 employed is a multilayered sheet obtained by forming a core layer 6a consisting of a single-layer sheet of a light-transmitting resin containing a light-diffusing agent in an amount of 0.1-35% by mass and laminating a surface layer 6b made of a light-transmitting resin containing an ultraviolet absorber on the flat lower side of the core layer 6a, and that a light-transmitting electroconductive layer 3 has been laminated on the flat upper side of the core layer 6a.

In Fig. 6 is illustrated the case in which this light-diffusing sheet 1 has been incorporated in a direct type backlight unit. The light-diffusing sheet 1 has been incorporated so that the surface layer 6b, which contains an ultraviolet absorber, is located on the side facing liner light source 7 and the core layer 6a, which contains a light-diffusing agent, is located on the opposite side. As a result, the light-transmitting electroconductive layer 3 is located in the uppermost position. In this unit including the light-diffusing sheet 1 thus incorporated, the light emitted by the line light sources 7 is incident on and passes through the surface layer 6b,and is diffused by the light-diffusing agent contained in the core layer 6a, and is emitted through the light-transmitting electroconductive layer 3. Consequently, the ultraviolet and the like contained in the light emitted by the light sources are absorbed by the ultraviolet absorber in the surface layer 6b. The surface layer 6b and the core layer 6a are hence inhibited from being deteriorated by ultraviolet, and the light-diffusing sheet 1 is less apt to yellow. In the light-diffusing sheet 1 for use in such direct type backlight units, the light-transmitting resins used therein preferably are resins having rigidity, such as polycarbonates, acrylics, and polycycloolefines, because many of the units are large and the units have supporting members only in peripheral parts. In addition, the thickness of the resins is preferably regulated to 0.3-10 mm. The thickness thereof is more preferably 0.5-5 mm, even more preferably 1-3 mm. Specifically, a light-diffusing sheet main body 60 is produced by forming a surface layer 6b made of an acrylic containing an ultraviolet absorber on the lower side of a core layer 6a, which is made of a polycarbonate containing organic polymer particles and has a thickness of 1-3 mm, and a light-transmitting electroconductive layer 3 is formed on the upper side of this light-diffusing sheet main body 60. The light-diffusing sheet 1 is thus produced.

The other constituents, i.e., the light-transmitting resins, light-diffusing agent, and light-transmitting electroconductive layer, are the same as in the embodiments described above. An explanation thereon is hence omitted.

This light-diffusing sheet 1 also has a large transmitted-light amount, can emit even high-luminance diffused light, has satisfactory hiding properties, and can exhibit sufficient electromagnetic shielding performance.

The light-diffusing sheet 1 described above is produced in the following manner. For example, a two-layer co-extrusion molding machine is used to extrude a light-transmitting resin containing a light-diffusing agent in an amount of 0.1-35% by mass into a sheet and simultaneously extrude a light-transmitting resin containing no light-diffusing agent and containing an ultraviolet absorber so that a sheet of the latter resin is laminated on the lower side of that sheet through extruding process. Thus, a light-diffusing sheet main body 60 consisting of a two-layer sheet composed of a core layer 6a and a surface layer 6b laminated on the lower side thereof is produced. On the other hand, an electroconductive film is produced by forming a light-transmitting electroconductive layer 3 on a light-transmitting resin film by a technique such as coating fluid application, sputtering, or vapor deposition, and this electroconductive film is laminated on the light-diffusing sheet main body 60 by a technique such as laminating. The light-diffusing sheet 1 is thus produced.

### EXAMPLES

Examples of the invention will be explained below as more specific embodiments thereof.

### [EXAMPLE 1]

Polypropylene containing 30% by mass talc particles having an average particle diameter of 7.2 µm as a light-diffusing agent was extrusion-molded into a single-layer sheet having a thickness of 130 µm to produce a light-diffusing sheet main body.

On the other hand, single-layer carbon nanotubes (synthesized by the method according to *Chemical Physics Letters,* 323(2000) pp.580-585; diameter, 1.3-1.8 nm) and a polyoxyethylene/polyoxypropylene copolymer as a dispersant were added to an isopropyl alcohol/water mixture (proportion, 3:1) as a solvent. The ingredients were evenly mixed and dispersed. Thus, a coating fluid containing the single-layer carbon nanotubes and the dispersant in amounts of 0.003% by mass and 0.05% by mass, respectively, was prepared.

This coating fluid was coated to one side of the light-diffusing sheet main body and dried. Thereafter, a thermosetting urethane acrylate solution diluted to 1/600 with methyl isobutyl ketone was further coated and dried to thereby form a 30 nm-thick light-transmitting electroconductive layer having a carbon nanotube estimated content of 47 mg/m² on one side of the light-diffusing sheet main body. This sheet was passed through the nip between a pair of embossing rolls to obtain an electromagnetic-shielding light-diffusing sheet having the structure shown in Fig. 1.

This light-diffusing sheet was examined with DEKTAK II [manufactured by ULVAC Corp.] to determine the arithmetic mean roughness Ra for a measuring range having a length of 5 mm. As a result, the Ra of the lower side serving as a light entrance side (lower side of the light-diffusing sheet main body) and the Ra of the upper side serving as a light emission side (upper side of the light-transmitting electroconductive layer) were found to be 0.6 µm and 2.1 µm, respectively.

The light-diffusing sheet was examined with haze meter HGM-2DP [manufactured by Suga Test Instruments Co., Ltd.] for total light transmittance and haze. As a result, the total light transmittance and the haze were found to be 84.2% and 78.1%, respectively.

The light-diffusing sheet was further examined for the surface resistivity of the upper side thereof (upper side of the light-transmitting electroconductive layer) in accordance with ASTM D257. As a result, the surface resistivity was found to be 1,396 Ω/□.

Furthermore, the electroconductive layer of this light-diffusing sheet was examined with an optical microscope. As a result, it was found that no aggregates of 0.5 µm or larger were present and the single-layer carbon nanotubes had been sufficiently dispersed. It was further found that many carbon nanotube bundles had been evenly dispersed separately from one another and were in contact with one another in the state of simply intersecting.

The light-diffusing sheet was placed on the lightguide plate of an edge light type backlight unit for liquid-crystal displays. The light source was switched on, and a luminance meter [ft-1°p, manufactured by Minolta Co., Ltd.] was disposed at a distance of 20 cm from the light-diffusing sheet to measure the luminance. As a result, the luminance was found to be 1, 378 cd/m². Simultaneously with the measurement, the display was visually examined as to whether the dots presented on the back side of the lightguide plate were hidden. As a result, the dots were found to be completely hidden and invisible.

Those results of the examinations are summarized in Table 1.

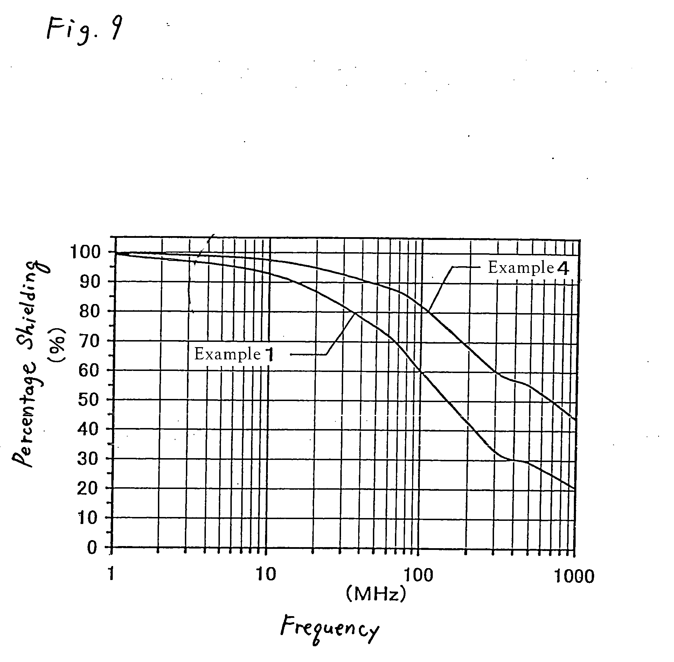

Furthermore, the light-diffusing sheet was examined for electromagnetic shielding properties by the KEC method [MA8602B, manufactured by ANRITSU Corp.]. The electric-field shielding performance is shown in Table 3 in terms of shielding percentage from electric field and is graphed in Fig. 9. As can be seen from Table 3 and Fig. 9, the light-diffusing sheet was ascertained to have an electromagnetic shielding performance of 20% or higher in the frequency range of 1-1,000 MHz. The shielding percentage from electric field means the intensity of reflected electric field, in terms of %, relative to the intensity of incident electric field which was taken as 1 (100%).

### [EXAMPLE 2]

An electromagnetic-shielding light-diffusing sheet was produced in the same manner as in Example 1, except that the content of the talc particles as a light-diffusing agent was changed to 25% by mass. This light-diffusing sheet was examined for total light transmittance, haze, luminance, arithmetic mean roughness of each of the upper and lower sides, surface resistivity, and dot-hiding property in the same manners as in Example 1. The results thereof are shown in Table 1. With respect to the electromagnetic shielding properties of the light-diffusing sheet, an examination was omitted because the surface resistivity thereof was almost the same as that in Example 1 and this light-diffusing sheet was thought to have almost the same performance as the electromagnetic-shielding light-diffusing sheet of Example 1.

### [EXAMPLE 3]

An electromagnetic-shielding light-diffusing sheet having the structure shown in Fig. 2 was obtained in the same manner as in Example 1, except that a light-diffusing sheet main body consisting of a three-layer sheet having a total thickness of 130 µm was produced by using a three-layer coextrusion molding machine to extrude polypropylene containing 21% by mass talc particles into a sheet having a thickness of 112 µm and simultaneously subject polypropylene containing no talc particles to coextrusion therewith so that 9 µm-thick sheets of the latter polypropylene were laminated respectively on the upper and lower sides of that former sheet.

This light-diffusing sheet was examined for total light transmittance, haze, luminance, arithmetic mean roughness of each of the upper and lower sides, surface resistivity, and dot-hiding property in the same manners as in Example 1. The results thereof are shown in Table 1.

### [EXAMPLE 4]

An ITO layer having a thickness of 50 nm was formed by sputtering on one side of the light-diffusing sheet main body of Example 1, which had been produced by extrusion-molding polypropylene containing 30% by mass talc particles having an average particle diameter of 7.2 µm as a light-diffusing agent into a single-layer sheet having a thickness of 130 µm. Thus, an electromagnetic-shielding light-diffusing sheet was obtained.

This light-diffusing sheet was examined for total light transmittance, haze, luminance, dot-hiding property, and surface resistivity in the same manners as in Example 1. The results thereof are shown in Table 1. With respect to electromagnetic shielding properties, shielding percentage from electric field are shown in Table 3 and are graphed in Fig. 9.

### [EXAMPLE 5]

An electromagnetic-shielding light-diffusing sheet having the structure shown in Fig. 3 was obtained in the same manner as in Example 1, except that a light-diffusing sheet main body consisting of a two-layer sheet having a total thickness of 130 µm was produced by using a two-layer coextrusion molding machine to extrude polypropylene into a sheet having a thickness of 121 µm and simultaneously subject polypropylene containing 30% by mass glass beads to coextrusion therewith so that a 9 µm-thick sheet of the latter polypropylene was laminated on that former sheet.

This light-diffusing sheet was examined for total light transmittance, haze, luminance, arithmetic mean roughness of each of the upper and lower sides, surface resistivity, and dot-hiding property in the same manners as in Example 1. The results thereof are shown in Table 1.

### [EXAMPLE 6]

An electromagnetic-shielding light-diffusing sheet having the structure shown in Fig. 4 was obtained in the same manner as in Example 1, except that a light-diffusing sheet main body consisting of a three-layer sheet having a total thickness of 131 µm was produced by using a three-layer coextrusion molding machine to extrude polypropylene containing 21% by mass talc particles into a sheet having a thickness of 112 µm and simultaneously subject polypropylene containing 30% by mass glass beads to coextrusion therewith so that 9 µm-thick sheets of the latter polypropylene were laminated respectively on the upper and lower sides of that former sheet.

This light-diffusing sheet was examined for total light transmittance, haze, luminance, arithmetic mean roughness of each of the upper and lower sides, surface resistivity, and dot-hiding property in the same manners as in Example 1. The results thereof are shown in Table 1.

### [COMPARATIVE EXAMPLE 1]

The light-diffusing sheet main body produced in Example 1 was examined for total light transmittance, haze, surface resistivity, luminance, arithmetic mean roughness, and dot-hiding property in the same manners as in Example 1. As a result, as shown in Table 2, the total light transmittance and haze thereof were found to be 88.0% and 78.1%, respectively, indicating that the light-diffusing sheet main body had light-diffusing performance. However, the surface resistivity thereof was 10¹⁵ Ω/□ or higher. This light-diffusing sheet main body was thus found to have no electromagnetic shielding performance.

### [COMPARATIVE EXAMPLE 2]

The coating fluid for forming a light-transmitting electroconductive layer prepared in Example 1 was coated to one side of a 125 µm-thick poly(ethylene terephthalate) film and dried. Thereafter, a thermosetting urethane acrylate solution diluted to 1/600 with methyl isobutyl ketone was further coated and dried to thereby obtain an electroconductivity-imparted sheet having a carbon nanotube estimated content of 46 mg/m². This electroconductivity-imparted sheet was laminated on the light-diffusing sheet main body produced in Example 1. The resultant sheet assemblage as a whole was examined for total light transmittance, haze, luminance, and dot-hiding property in the same manners as in Example 1. As a result, as shown in Table 2, the total light transmittance and haze thereof were found to be 80.3% and 77.8%, respectively, indicating that this sheet assemblage had a low total light transmittance and was inferior in the performance required of light-diffusing sheets. The surface resistivity of the electroconductivity-imparted sheet also was measured in the same manner and was found to be 1,305 Ω/□. This electroconductivity-imparted sheet was hence examined for electromagnetic shielding performance in the same manner as in Example 1. As a result, this sheet was found to have the same electromagnetic shielding performance, as shown in Table 3. Incidentally, the electroconductivity-imparted sheet itself had a total light transmittance of 90.1% and a haze of 2.0%.

### [COMPARATIVE EXAMPLE 3]

Poly(ethylene terephthalate) coated with 125 µm-thick ITO was used as an electroconductivity-imparted sheet. This electroconductivity-imparted sheet was laminated on the light-diffusing sheet main body produced in Example 1. The resultant sheet assemblage as a whole was examined for total light transmittance, haze, luminance, and dot-hiding property in the same manners as in Example 1. As a result, as shown in Table 2, the total light transmittance and haze thereof were found to be 78.5% and 77.2%, respectively, indicating that this sheet assemblage had a low total light transmittance and was inferior in the performance required of light-diffusing sheets. The surface resistivity of the electroconductivity-imparted sheet also was measured in the same manner and was found to be 437 Ω/□. This value of resistivity means that the sheet was capable of electromagnetic shielding. Incidentally, the electroconductivity-imparted sheet itself had a total light transmittance of 88.8% and a haze of 1.4%.

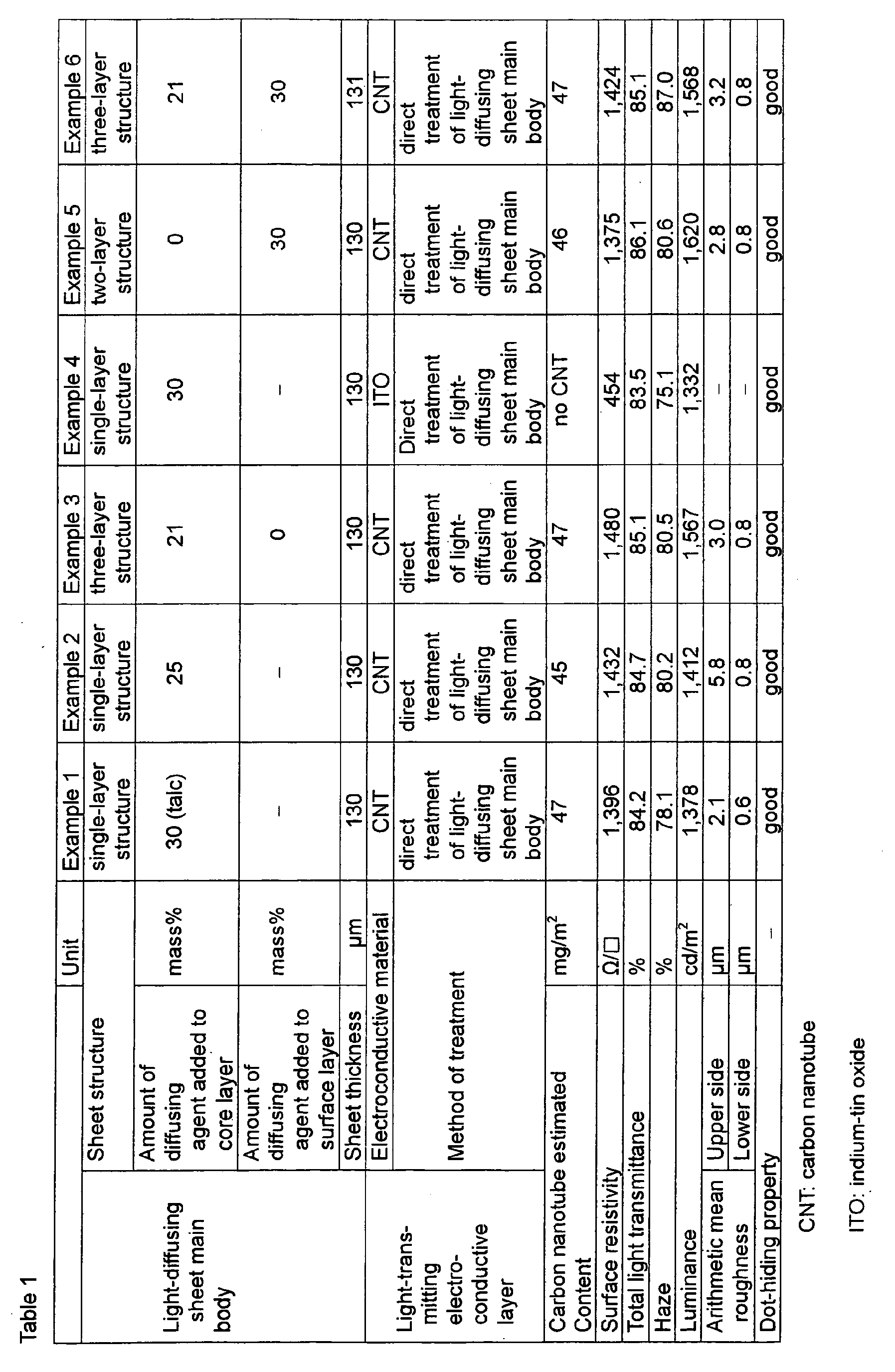

**Table 2**

| | | Unit | Comparative Example 1 | Comparative Example 2 | Comparative Example 3 |
|---|---|---|---|---|---|
| | Sheet structure | | single-layer structure | single-layer structure | single-layer structure |
| Light-diffusing sheet main body | Amount of diffusing agent added to core layer | mass % | 30 | 30 | 30 |
| | Amount of diffusing agent added to surface layer | mass % | - | - | - |
| | Sheet thickness | µm | 130 | 125 | 125 |
| Light-transmitting electroconductive layer | Electroconductive material | | - | CNT | ITO |
| | Method of treatment | | no treatment | separate incorporation of electroconductivity-imparted sheet | separate incorporation of electroconductivity-imparted sheet |
| | Electroconductive-sheet base | | - | PET | PET |
| Carbon nanotube estimated content | | mg/m² | - | 46 | - |
| Surface resistivity | | Ω/□ | >10¹⁵ | 1,305 | 437 |
| Total light transmittance | | % | 88.0 | 80.3 | 78.5 |
| Haze | | % | 78.1 | 77.8 | 77.2 |
| Luminance | | cd/m² | 1,395 | 1,320 | 1,305 |
| Arithmetic mean roughness | Upper side | µm | - | - | - |
| | Lower side | µm | - | - | - |
| Dot-hiding property | | - | good | good | good |

| | | | | | |
|---|---|---|---|---|---|
| CNT: carbon nanotube | | | | | |
| ITO: indium-tin oxide | | | | | |

**Table 3**

| | | Unit | Example 1 | Example 4 | Comparative Example 2 |
|---|---|---|---|---|---|
| Electromagnetic shielding property (shielding percentage from electric field) | Electromagnetic frequency: 1 MHz | % | 99.2 | 99.8 | 99.1 |
| | Electromagnetic frequency: 10 MHz | % | 92.9 | 97.5 | 92.6 |
| | Electromagnetic frequency: 50 MHz | % | 74.9 | 89.4 | 75.0 |
| | Electromagnetic frequency: 100 MHz | % | 60.2 | 82.2 | 60.1 |
| | Electromagnetic frequency: 300 MHz | % | 33.2 | 60.2 | 33.0 |
| | Electromagnetic frequency: 500 MHz | % | 29.2 | 55.3 | 29.5 |
| | Electromagnetic frequency: 1000 MHz | % | 20.6 | 43.8 | 21.0 |

It can be seen from Tables 1 and 3 that in each of the Examples, the total light transmittance is as high as 80% or higher, showing that the light-diffusing sheet has sufficient light-transmitting properties, and the haze also is as high as 75-90%, showing that sufficient light diffusion is attained. In the examination for dot-hiding property, no dots are visible, showing that the sheet has the performance required of light-diffusing sheets. In each of the Examples employing an electroconductive layer containing carbon nanotubes, the surface resistivity is about 1,400 Ω/□. As can be seen from the values of shielding percentage from electric field in Example 1, electro-shielding of 20% or higher are attained in the frequency range of 1-1,000 MHz, showing that the light-diffusing sheets of the Examples further have electromagnetic shielding performance. In Example 4 also, in which the electroconductive layer is ITO deposited by sputtering, the surface resistivity is about 450 Ω/□ and electro-shielding of 40% or higher are attained in the frequency range of 1-1,000 MHz, showing that this light-diffusing sheet further has electromagnetic shielding performance.

It can be seen from Table 2 that even when a light-diffusing sheet main body is combined with an electroconductivity-imparted sheet as in Comparative Examples 2 and 3, this combination has a reduced total light transmittance although it has electromagnetic shielding performance and a high haze. Specifically, the total light transmittance in Comparative Example 2 is lower by as large as about 4% than that in Example 1, and the total light transmittance in Comparative Example 3 is lower by as large as about 6% than that in Example 4. Furthermore, it can be seen that the luminance also has been reduced by as large as 30-60 cd/m². It can be seen from these results that the incorporation of the single sheet of each of the Examples into a liquid-crystal display or the like has an effect that the screen is bright and easy to view as compared with the case where a light-diffusing sheet and an electroconductivity-imparted sheet are separately incorporated as in Comparative Examples 2 and 3. Namely, it can be seen that the light-diffusing sheets of the Examples are highly suitable for practical use.

Furthermore, compared to the case where the two sheets of Comparative Example 2 or 3 are incorporated into a liquid-crystal display or the like, the incorporation of each single sheet according to the invention further has effects, for example, that the amount of materials required is small and a cost reduction can hence be attained, that the number of steps for incorporation is halved to attain a reduction in incorporation cost, and that a thickness in products such as liquid-crystal displays can be thined.

### [EXAMPLE 7]

A two-layer coextrusion molding machine was used to extrude a polycarbonate resin [PC-1250, manufactured by Teij in Chemicals Ltd.] containing 1% by mass infusible fine acrylic polymer particles [EXL-5136, manufactured by Rohm & Haas Co.; mass-distribution average particle diameter, 7 µm] into a 1.7 mm-thick sheet and simultaneously coextrude an acrylic resin [Acrypet V, manufactured by Mitsubishi Rayon Co., Ltd.] containing 0.3% by mass ultraviolet absorber [LA-31, manufactured by Asahi Denka K.K.] in a thickness of 0.3 mm on the lower side of that former sheet. Thus, a light-diffusing sheet main body having a two-layer structure with a total thickness of 2.0 mm was produced.

The coating fluid for forming a light-transmitting electroconductive layer prepared in Example 1 was coated to the upper side of the light-diffusing sheet main body (upper surface of the core layer) and dried. Thereafter, a thermosetting urethane acrylate solution diluted to 1/600 with methyl isobutyl ketone was further coated and dried to thereby form a light-transmitting electroconductive layer having a carbon nanotube estimated content of 46 mg/m² on one side of the light-diffusing sheet main body. Thus, an electromagnetic-shielding light-diffusing sheet having the structure shown in Fig. 6 was obtained.

This light-diffusing sheet was examined for total light transmittance, haze, and surface resistivity in the same manners as in Example 1. As a result, as shown in Table 4, the total light transmittance and haze thereof were found to be 56.9% and 93.1%, respectively, indicating that this light-diffusing sheet had light-diffusing performance. The surface resistivity thereof was 1,402 Ω/□, which was almost the same as in Example 1. This light-diffusing sheet was thus found to have electromagnetic shielding performance.

Furthermore, light resistance (degree of yellowing) was examined. A fadeometer [FAL-5H-B, manufactured by Suga Test Instruments Co., Ltd.] was used to cause ultraviolet to strike on the light-diffusing sheet from the acrylic resin side, and the yellowness of the sheet was measured at 500 hours after initiation of the irradiation. The change in yellowness (degree of yellowness) was determined from a comparison with an initial yellowness. As a result, the change was found to be an increase as small as 0.5. These results are shown in Table 4.

### [EXAMPLE 8]

The ultraviolet absorber used in Example 7 in an amount of 0.3% by mass was mixed into the polycarbonate resin used in Example 7, in which 1% by mass of infusible fine acrylic polymer particles had been mixed therein, and the resulting resin was extruded into a 1.0 mm-thick sheet. Simultaneously therewith, the polycarbonate resin was coextruded in a thickness of 1.0 mm over the upper side of that former sheet to produce a light-diffusing sheet main body having a two-layer structure with a total thickness of 2.0 mm.

A light-transmitting electroconductive layer was formed on the light-diffusing sheet main body in the same manner as in Example 7 to obtain an electromagnetic-shielding light-diffusing sheet.

This light-diffusing sheet was examined for surface resistivity, total light transmittance, haze, and light resistance (degree of yellowness) in the same manners as in Example 7. As a result, as shown in Table 4, the surface resistivity, total light transmittance, haze, and light resistance (increase in the degree of yellowness) thereof were found to be 1,383 Ω/□, 50.0%, 92.8%, and 0.5, respectively. The electromagnetic-shielding light-diffusing sheet was thus found to have electromagnetic shielding performance and be excellent in light-transmitting properties and hiding properties and less apt to discolor.

### [EXAMPLE 9]

The polycarbonate resin used in Example 7, which contained 1% by mass infusible fine acrylic polymer particles, was extruded into a 1.0 mm-thick sheet. Simultaneously therewith, the polycarbonate resin was coextruded in a thickness of 1.0 mm over the upper side of that former sheet to produce a light-diffusing sheet main body having a two-layer structure with a total thickness of 2.0 mm.

A light-transmitting electroconductive layer was formed on the light-diffusing sheet main body in the same manner as in Example 7 to obtain an electromagnetic-shielding light-diffusing sheet.

This light-diffusing sheet was examined for surface resistivity, total light transmittance, haze, and light resistance (degree of yellowness) in the same manners as in Example 7. As a result, as shown in Table 4, the surface resistivity, total light transmittance, haze, and light resistance (increase in the degree of yellowness) thereof were found to be 1,356 Ω/□, 50.8%, 92.7%, and 1.5, respectively. The electromagnetic-shielding light-diffusing sheet was thus found to have electromagnetic shielding performance and be excellent in light-transmitting properties and hiding properties. However, the increase in light resistance (degree of yellowness) was 1.5. Namely, this light-diffusing sheet discolored more than the sheet of Example 7.

**Table 4**

| | | Unit | Example 7 | Example 8 | Example 9 |
|---|---|---|---|---|---|
| | Sheet structure | | two-layer structure | two-layer structure | three-layer structure |
| Light-diffusing sheet main body | Amount of diffusing agent added to upper outer layer | mass% | 1 | - | - |
| | Amount of diffusing agent added to lower outer layer | mass% | - | 1 | 1 |
| | Amount of ultraviolet absorber added | mass% | 0.3 | 0.3 | - |
| | Sheet thickness | mm | 2.0 | 2.0 | 2.0 |
| Light-transmitting electroconductive layer | Electroconductive material | | CNT | CNT | CNT |
| | Method of treatment | | direct treatment of light-diffusing sheet main body | direct treatment of light-diffusing sheet main body | direct treatment of light-diffusing sheet main body |
| Carbon nanotube estimated content | | mg/m² | 46 | 47 | 47 |
| Surface resistivity | | Ω/□ | 1402 | 1383 | 1356 |
| Total light transmittance | | % | 56.9 | 50.0 | 50.8 |
| Haze | | % | 93.1 | 92.8 | 92.7 |
| Light resistance (degree of yellowness) | | - | 0.5 | 0.5 | 1.5 |

It can be seen from Table 4 that in each Example, the light-diffusing sheet has a total light transmittance of 50-60% and a haze as high as 90% or more although the thickness thereof is as large as 2 mm, and that these sheets hence have light-transmitting properties, excellent hiding properties, and light-diffusing performance. It can also be seen that since the surface resistivities of the light-diffusing sheets are about 1, 400 Ω/□, the sheets further have electromagnetic shielding performance. It can be seen that since the sheets of Examples 7 to 9 have a thickness of 2 mm and a total light transmittance of 50-60%, they are especially useful as electromagnetic-shielding light-diffusing sheets to be incorporated into direct type backlight units in which the quantity of light is large.

Furthermore, the electromagnetic-shielding light-diffusing sheet of Example 7, in which the surface layer is made of an acrylic resin having a lower refractive index than the polycarbonate constituting the core layer, has a total light transmittance higher by more than about 6-7% than those of the light-diffusing sheets of Examples 8 and 9, in which the surface layer and the core layer each are made of a polycarbonate. It can hence be seen that when a resin having a lower refractive index than the resin constituting the core layer is used as the resin constituting the surface layer on which light is incident, this constitution is advantageous for increasing the total light transmittance.

Moreover, the light-diffusing sheets of Examples 7 and 8, which have a surface layer containing an ultraviolet absorber, have a degree of yellowness reduced to one-third compared with the degree of yellowness in Example 9, which has a surface layer and a core layer each containing no ultraviolet absorber. Namely, it can be seen that the light-diffusing sheets of Examples 7 and 8 have remarkably improved light resistance. It can be seen from these results that the incorporation of an ultraviolet absorber into the surface layer enables the light-diffusing sheet to have greatly improved light resistance.

While the invention has been described in detail and with reference to specific embodiments thereof, it will be apparent to one skilled in the art that various changes and modifications can be made therein without departing from the spirit and scope thereof.

This application is based on a Japanese patent application filed on April 28, 2003 (Application No. 2003-123736), the entire contents thereof being herein incorporated by reference.

### Industrial Applicability

According to the invention, an electromagnetic-shielding light-diffusing sheet which has satisfactory electromagnetic shielding performance and a high total light transmittance and can emit even diffused light can be provided.

## Claims

1. An electromagnetic-shielding light-diffusing sheet, which comprises a light-diffusing sheet main body and, laminated on at least one side thereof, a light-transmitting electroconductive layer having a surface resistivity of 10⁵ Ω/□ or lower.

2. The electromagnetic-shielding light-diffusing sheet according to claim 1, wherein the light-diffusing sheet main body contains a light-diffusing agent.

3. The electromagnetic-shielding light-diffusing sheet according to claim 2, wherein the light-diffusing agent is contained in an amount of 0.1-35% by mass.

4. The electromagnetic-shielding light-diffusing sheet according to any one of claims 1 to 3, wherein the light-diffusing sheet has fine recesses and protrusions formed on at least one side thereof.

5. The electromagnetic-shielding light-diffusing sheet according to any one of claims 1 to 4, wherein the light-diffusing sheet main body is a multilayered sheet comprising at least a core layer and a surface layer, and wherein the core layer contains a light-diffusing agent and the surface layer contains no light-diffusing agent.

6. The electromagnetic-shielding light-diffusing sheet according to any one of claims 1 to 4, wherein the light-diffusing sheet main body is a multilayered sheet comprising at least a core layer and a surface layer, and wherein the core layer contains no light-diffusing agent and the surface layer contains a light-diffusing agent.

7. The electromagnetic-shielding light-diffusing sheet according to any one of claims 1 to 4, wherein the light-diffusing sheet main body is a multilayered sheet comprising at least a core layer and a surface layer, and wherein the core layer and the surface layer contain a light-diffusing agent.

8. The electromagnetic-shielding light-diffusing sheet according to any one of claims 5 to 7, wherein the light-diffusing sheet main body is a multilayered sheet comprising at least a core layer and a surface layer, and wherein the light-transmitting resin used for the surface layer is a resin having a lower refractive index than the light-transmitting resin used for the core layer.

9. The electromagnetic-shielding light-diffusing sheet according to any one of claims 5 to 8, wherein at least the surface layer contains an ultraviolet absorber.

10. The electromagnetic-shielding light-diffusing sheet according to any one of claims 1 to 9, wherein the light-diffusing sheet main body is made of a light-transmitting polypropylene resin containing a talc light-diffusing agent in an amount of 15-35% by mass and the light-diffusing sheet has fine recesses and protrusions formed on each side thereof.

11. The electromagnetic-shielding light-diffusing sheet according to any one of claims 5 to 9, wherein the light-diffusing sheet main body is a multilayered sheet comprising a core layer made of a light-transmitting polypropylene resin containing a talc light-diffusing agent in an amount of 15-35% by mass and, laminated on at least one side of the core layer, a surface layer made of a light-transmitting resin, and wherein the light-diffusing sheet has fine recesses and protrusions formed on each side thereof.

12. The electromagnetic-shielding light-diffusing sheet according to any one of claims 5 to 9, wherein the light-diffusing sheet main body is a multilayered sheet comprising a core layer made of a light-transmitting polycarbonate resin containing an acrylic light-diffusing agent in an amount of 0.1-20% by mass and, laminated on at least one side of the core layer, a surface layer made of a light-transmitting resin.

13. The electromagnetic-shielding light-diffusing sheet according to any one of claims 1 to 12, wherein the light-transmitting electroconductive layer is a metal oxide layer.

14. The electromagnetic-shielding light-diffusing sheet according to any one of claims 1 to 12, wherein the light-transmitting electroconductive layer is a layer containing ultrafine electroconductive fibers.

15. The electromagnetic-shielding light-diffusing sheet according to claim 14, wherein the ultrafine electroconductive fibers are in a dispersed state without aggregating and are in contact with one another.

16. The electromagnetic-shielding light-diffusing sheet according to claim 14 or 15, wherein the ultrafine electroconductive fibers are in contact with one another in such a state that the individual fibers have been dispersed separately from one another or that individual bundles composed of plural ultrafine electroconductive fibers have been dispersed separately from one another.

17. The electromagnetic-shielding light-diffusing sheet according to any one of claims 14 to 16, wherein the ultrafine electroconductive fibers are carbon nanotubes.

18. The electromagnetic-shielding light-diffusing sheet according to claim 17, wherein the estimated content of the carbon nanotubes contained in the light-transmitting electroconductive layer is 20-450 mg/m² and the light-transmitting electroconductive layer has a thickness of 10-400 nm.

19. The electromagnetic-shielding light-diffusing sheet according to any one of claims 1 to 18, wherein the electromagnetic-shielding light-diffusing sheet has a total light transmittance of 50-95% and a haze of 30-95%.

20. The electromagnetic-shielding light-diffusing sheet according to any one of claims 1 to 19, which has a light-transmitting resin cover layer lamineited on the light-transmitting electroconductive layer.
